# EUROPÄISCHE PATENTANMELDUNG

(11) **EP 4 697 442 A1**
(43) Veröffentlichungstag der Anmeldung: **18.02.2026**
(21) Anmeldenummer: 24194632.6
(22) Anmeldetag: 14.08.2024
(51) Int. Cl.: H01M 10/42, H01M 10/48, A62C 3/16, G08B 17/00

(54) **THERMISCHE ÜBERWACHUNG VON LITHIUM- ODER NATRIUM-IONEN-ANTRIEBSBATTERIEN IN EINEM REGALLAGERSYSTEM ÜBER EINE FAHRZEUGBUS- ODER ON-BOARD-DIAGNOSESCHNITTSTELLE**

(71) Anmelder: Siemens Schweiz AG, 8047 Zürich (CH)
(72) Erfinder: Konrad, Hilmar, 6340 Baar (CH)
(74) Vertreter: Siemens Patent Attorneys

(57) **Zusammenfassung**

Eine Anlage (BMA) ist zur thermischen Überwachung einer Vielzahl von Antriebsbatterien (BP) vorgesehen, wobei die Antriebsbatterien in einem Regallagersystem (RL) mit einer Vielzahl von Lagerfächern (LF) eingelagert sind und jeweils eine Mehrzahl von Batteriemodulen (MOD) mit Batteriezellen (BAT), ein Batteriemanagementsystem (BMS) sowie eine Anschlussmöglichkeit an eine Fahrzeugsteuerung des Elektrofahrzeugs umfassen. Die Anlage umfasst zumindest einen Anschlusspunkt (AP) im Bereich des Regallagersystems zur insbesondere automatischen datentechnischen Verbindung mit einer jeweils von aussen zugänglichen Fahrzeugbus- oder Diagnoseschnittstelle (CAN, OBD) einer eingelagerten Antriebsbatterie, um von dem Batteriemanagementsystem der jeweils eingelagerten Antriebsbatterie aktuelle Antriebsbatteriedaten (D), insbesondere Batterietemperaturwerte, und/oder eine Übertemperaturwarnung (W) zu empfangen. Die Anlage ist dazu eingerichtet, die von dem zumindest einen Anschlusspunkt empfangenen Antriebsbatteriedaten und/oder empfangene Übertemperaturwarnung zu der jeweiligen im Regallagersystem eingelagerten Antriebsbatterie vorzugsweise mit einer zugeordneten Lagefachposition (POS) an eine übergeordnete Gefahrenmeldestelle (Z) auszugeben.

## Beschreibung

### Technisches Gebiet

Die Erfindung betrifft eine Anlage zur thermischen Überwachung einer Vielzahl von Antriebsbatterien, insbesondere auf ein thermisches Versagen hin. Die Antriebsbatterien sind in einem Regallagersystem mit einer Vielzahl von Lagerfächern eingelagert. Weiter sind die Antriebsbatterien zur Anbringung, insbesondere zum Einbau in Elektrofahrzeuge vorgesehen. Zudem umfassen die Antriebsbatterien jeweils eine Mehrzahl von Batteriemodulen mit jeweils einer Mehrzahl von Batteriezellen, ein Batteriemanagementsystem (BMS) sowie eine Anschlussmöglichkeit an eine Fahrzeugsteuerung des Elektrofahrzeugs.

Die Elektrofahrzeuge sind vor allem sogenannte Plug-in-Elektrofahrzeuge, also batterieelektrische Fahrzeuge, welche als alleinige Energiequelle eine Antriebsbatterie nutzen, die über ein Ladekabel mit Stecker, auf induktiv gekoppeltem Wege oder über einen Stromabnehmer aufgeladen wird. Die Elektrofahrzeuge können auch sogenannte Plug-in-Hybrid-Elektrofahrzeuge sein, die eine Antriebsbatterie nutzen, wobei die Antriebsbatterie dann sowohl über einen Verbrennungsmotor als auch über ein Ladekabel mit Stecker aufgeladen werden kann. Die Elektrofahrzeuge können elektrisch angetriebene Personenkraftwagen, Lastkraftwagen, Busse, Strassenbahnen, Züge oder Motorräder sein.

Derartige Antriebsbatterien werden typischerweise nach ihrer Herstellung in einem Regallagersystem eingelagert bzw. zwischengelagert. Bei Bedarf wird eine solche Antriebsbatterie aus dem Regallagersystem entnommen und dann in einem Elektrofahrzeug verbaut. Hierzu gehört neben dem elektrischen Leistungsanschluss der Antriebsbatterie an einen Traktionswechselrichter des Elektrofahrzeugs auch der elektrische Anschluss der Antriebsbatterie an die Fahrzeugsteuerung bzw. an den Fahrzeugbus des Elektrofahrzeugs. Der Anschluss an die Fahrzeugsteuerung erfolgt vorzugsweise über eine kabelgebundene Busschnittstelle, typischerweise über eine CAN-Busschnittstelle.

Weiter betrifft die Erfindung eine geeignete Verwendung einer Fahrzeugbus- oder Diagnoseschnittstelle einer Antriebsbatterie für Elektrofahrzeuge.

Schliesslich betrifft die Erfindung ein zur thermischen Überwachungsanlage korrespondierendes Verfahren zur Überwachung einer Vielzahl von Antriebsbatterien, insbesondere auf ein thermisches Versagen hin.

### Technischer Hintergrund

Bei den betrachteten Batteriezellen handelt es sich um wiederaufladbare Batteriezellen mit einem Flüssigelektrolyten, insbesondere um Lithium-Ionen- oder Natrium-Ionen-Batteriezellen, und somit um sogenannte Sekundärzellen bzw. Akkumulatoren. Im Folgenden wird jedoch der technisch geläufigere Begriff «Batterie» oder «Batteriezelle» synonym für den technischen Begriff «Akkumulator» bzw. «Akkumulatorzelle» verwendet.

Fertiggestellte Antriebsbatterien werden in einem Hochregallagersystem mit einer Einlagerungskapazität von mehreren Tausend derartiger Antriebsbatterien eingelagert und müssen ständig auf einen möglichen Brand hin überwacht werden. Die eingelagerten Antriebsbatterien können dabei jeweils eine gespeicherte elektrische Energiemenge im Bereich von 5 kWh bis 400 kWh, typischerweise im Bereich von 20 kWh bis 100 kWh aufweisen. Bei einem Brand muss eine solche Antriebsbatterie aufgrund ihres hohen Energieinhalts möglichst schnell aus dem Hochregalregal entnommen und zu einem Havarieplatz gebracht werden können, um ein Übergreifen einer brennenden Antriebsbatterie auf benachbarte zu verhindern. Dies ist insbesondere bei Lithium-lonen-Batteriezellen erforderlich, wenn diese bei einem sogenannten «Thermal Runaway» thermisch durchgehen und sehr schnell auf benachbarte Batteriezellen übergreifen. Von dort aus ist ein einsetzender Brand kaum mehr zu löschen.

Heutige Regallagersysteme umfassen eine Vielzahl von Hochregalen bzw. Hochregalzeilen. Häufig kommen automatisierte Hochregallagersysteme zum Einsatz. Diese umfassen eine Vielzahl von Hochregalzeilen, die ihrerseits aus einer Mehrzahl von horizontalen Ebenen und vertikalen Feldern bestehen. Die Felder werden auch als Säulen, das Regallagersystem auch als Hochregal und die Lagerfächer auch als Lagerplätze bezeichnet.

Ein solches Regallagersystem kann mehrere Hochregalzeilen umfassen. Jede Hochregalzeile kann abhängig von den Abmessungen der zu lagernden Antriebsbatterien 25 und mehr Ebenen sowie 50 Felder und mehr umfassen. Im Falle von 10 Hochregalzeilen und von 20 Ebenen und 50 Feldern je Hochregalzeile ergeben sich somit 10000 Lagerfächer je Regallagersystem. Ist eine beidseitige Einlagerung in den Hochregalzeilen vorgesehen, so verdoppelt sich die Anzahl auf 20000 Lagerfächer zur möglichen Einlagerung der Antriebsbatterien.

Allein für den Fall einer einzelnen Hochregalzeile wären dann bereits 1000 Brandmelder bzw. 2000 Brandmelder erforderlich, um gezielt jedes Lagerfach auf einen Brand hin zu überwachen. Die Wartung und Funktionstests einer derart grossen Anzahl von Brandmeldern sind in solchen Umgebungen sehr aufwändig und im laufenden Betrieb kaum umsetzbar.

Aus der Siemens-Patentanmeldung DE 10 2021 204 398 A1 ist eine Matrixanordnung von Ansaugrauchmeldern oder von linienförmigen Wärmemeldern zur Überwachung von Lagergut in einem Regallagersystem bekannt.

### Zusammenfassung der Erfindung

Es ist eine Aufgabe der Erfindung, eine verbesserte Anlage zur Überwachung einer Vielzahl von Antriebsbatterien für Elektrofahrzeuge auf ein thermisches Versagen hin anzugeben.

Es ist eine weitere Aufgabe der Erfindung, eine Anlage zur Überwachung einer Vielzahl von Antriebsbatterien für Elektrofahrzeuge anzugeben, die auf einfachem Wege eine schnelle Warnung bei einer detektierten Übertemperatur sowie eine genaue Lokalisierung der detektierten Übertemperatur im Regallagersystem ermöglicht.

Weiter ist es eine Aufgabe der vorliegenden Erfindung, eine vorteilhafte Verwendung einer Fahrzeugbus- oder Diagnoseschnittstelle einer Antriebsbatterie anzugeben.

Es ist schliesslich eine Aufgabe der Erfindung, ein verbessertes Verfahren zur Überwachung einer Vielzahl von derartigen Antriebsbatterien in einem Regallagersystem anzugeben, das auf einfachem Wege eine entsprechende Warnung und Lokalisierung ermöglicht.

Die Aufgabe der Erfindung wird durch die Gegenstände der unabhängigen Patentansprüche gelöst. Vorteilhafte Ausführungsformen der vorliegenden Erfindung sind in den abhängigen Ansprüchen beschrieben.

Für die weitere Beschreibung gilt zur Vermeidung unnötiger Wiederholungen, dass Merkmale und Details, die im Zusammenhang mit der genannten Anlage zur thermischen Überwachung einer Vielzahl von Antriebsbatterien beschrieben sind, selbstverständlich auch im Zusammenhang mit und im Hinblick auf die Verwendung einer von aussen zugänglichen Fahrzeugbus- oder Diagnoseschnittstelle einer Antriebsbatterie für Elektrofahrzeuge zur thermischen Überwachung der Antriebsbatterie sowie selbstverständlich auch im Zusammenhang mit und im Hinblick auf das Verfahren zur thermischen Überwachung einer Vielzahl von Antriebsbatterien für Elektrofahrzeuge gelten.

Erfindungsgemäss umfasst die Anlage zumindest einen Anschlusspunkt im Bereich der Lagerfächer bzw. des Regallagersystems zur insbesondere automatischen datentechnischen Verbindung mit einer von aussen zugänglichen Fahrzeugbus- oder Diagnoseschnittstelle einer jeweils in einem Lagerfach eingelagerten Antriebsbatterie, um aktuelle Antriebsbatteriedaten und/oder eine Übertemperaturwarnung von dem Batteriemanagementsystem der jeweils eingelagerten Antriebsbatterie zu empfangen.

Bei den Antriebsbatteriedaten handelt es sich insbesondere um messtechnisch erfasste Batterietemperaturwerte und/oder um messtechnisch erfasste Batteriespannungswerte, jeweils zur gesamten Antriebsbatterie und/oder zu einem jeweiligen Batteriemodul der Antriebsbatterie und/oder zu einer jeweiligen Batteriezelle eines jeweiligen Batteriemoduls der Antriebsbatterie. Die Batterietemperaturwerte zur gesamten Antriebsbatterie können z.B. fortlaufend erfasste, in der gesamten Antriebsbatterie maximal auftretende Temperaturwerte zu einem der Batteriemodule oder zu einer der Batteriezellen in einem der Batteriemodule sein.

Eine Übertemperaturwarnung ist dabei (nur) im Falle des Überschreitens einer Vergleichstemperatur, wie z.B. von 80°C oder 100°C, von dem Batteriemanagementsystem ausgebbar. Eine Übertemperaturwarnung kann sich im Bezug zur Vergleichstemperatur auf eine zu hohe Temperatur der gesamten Antriebsbatterie und/oder auf eine zu hohe Batteriemodultemperatur der Antriebsbatterie und/oder auf eine zu hohe Batteriezellentemperatur in einer der Batteriemodule der Antriebsbatterie beziehen. Dadurch reduziert sich vorteilhaft das Datenaufkommen zu der übergeordneten Gefahrenmeldestelle drastisch. Eine Weiterleitung aktueller Batterietemperaturwerte und gegebenenfalls weiterer Antriebsbatteriedaten ist dann nicht erforderlich. In diesem Fall kann davon ausgegangen werden, dass die Antriebsbatterie in Ordnung ist. Batterieintern übernimmt dann das Batteriemanagementsystem die thermische Überwachung der jeweiligen Antriebsbatterie.

Die Gefahrenmeldestelle selbst kann dabei Teil der erfindungsgemässen Anlage sein. Die Antriebsbatteriedaten können zusätzlich Batteriezellenspannungswerte oder Batteriemodulspannungswerte, oder auch einen Wert für eine Rauchdichte umfassen, falls in der Antriebsbatterie ein Rauchmelder installiert sein sollte.

Der Kern der Erfindung liegt darin, die durch ein Batteriemanagementsystem einer Antriebsbatterie "sowieso" fortlaufend erfassbaren Batterietemperaturwerte und/oder eine gemeldete Übertemperaturwarnung automatisch zur thermischen Überwachung dieser Antriebsbatterie zu verwenden, wenn diese in einem Regallagersystem eingelagert wird.

Der Vorteil der Erfindung liegt in der sehr frühzeitigen Detektion einer möglicherweise brandgefährlichen Übertemperatur in einer Antriebsbatterie.

Ist die Anlage dazu eingerichtet, die ungefähre, vorzugsweise genau Lagerfachposition der möglicherweise schadhaften Antriebsbatterie zu bestimmen, so handelt es sich um eine Anlage zur thermischen Überwachung einer Vielzahl von Antriebsbatterien sowie zur Lokalisierung einer möglicherweise schadhaften Antriebsbatterie im Falle einer Übertemperatur.

Dadurch ist vorteilhaft ein sehr schnelles Entfernen der betreffenden Antriebsbatterie aus dem Regallagersystem möglich.

Im Vergleich zu bekannten Systemen wird das thermische Durchgehen einer Batteriezelle im Innern einer Batterie durch das eigene Batteriemanagementsystem (BMS) der Batterie frühestmöglich detektiert. Dagegen ist bei den bekannten Überwachungssystemen erst viel später eine Temperaturerhöhung sowie eine mit dem thermischen Durchgehen einer Batteriezelle einhergehende Rauchentwicklung ausserhalb der Batterie detektierbar.

Vorzugsweise ist die übergeordnete Gefahrenmeldestelle auch bereits dazu eingerichtet, die empfangenen Antriebsbatteriedaten an eine Leitstelle oder an eine sogenannte Managementstation weiterzuleiten. Die übergeordnete Gefahrenmeldestelle kann alternativ oder zusätzlich dazu eingerichtet sein, eine empfangene Übertemperaturwarnung als Gefahrenmeldung an der übergeordnete Gefahrenmeldestelle auszugeben, wie z.B. in Form eines akustischen und/oder optischen Alarms, und/oder an die Leitstelle oder an die Managementstation weiterzuleiten. In diesem Fall entspricht die jeweilige Übertemperaturwarnung der Gefahrenmeldung.

Die übergeordnete Gefahrenmeldestelle kann alternativ dazu eingerichtet sein, eine empfangene Übertemperaturwarnung zunächst zu bewerten und eine Gefahrenmeldung nach erfolgter Bewertung an die Leitstelle oder an die Managementstation auszugeben. Dies ist z.B. dann vorteilhaft, wenn eine Übertemperaturwarnung mehrere Warnstufen umfasst, wie z.B. «erhöhte Batterietemperatur», «deutlich erhöhte Batterietemperatur» oder «kritisch hohe Batterietemperatur». In diesem Fall kann die übergeordnete Gefahrenmeldestelle dazu eingerichtet sein, eine Gefahrenmeldung erst nach Eintreffen der kritischsten Warnstufe an die Leitstelle oder an die Managementstation auszugeben und/oder direkt an der Gefahrenmeldestelle in Form eines akustischen und/oder optischen Alarms auszugeben.

Das fortlaufend wiederholte Auslesen bzw. Abfragen der Batterietemperaturen und/oder einer Übertemperaturwarnung erfolgt über eine von aussen zugängliche Fahrzeugbusschnittstelle, die bestimmungsgemäss zum Anschluss der Antriebsbatterie an die Fahrzeugsteuerung des für den Einbau der Antriebsbatterie vorgesehenen Elektrofahrzeugs vorgesehen ist, oder über eine von aussen zugängliche Diagnoseschnittstelle für eine On-Board Diagnose (OBD). Sowohl die Fahrzeugbusschnittstelle als auch die Diagnoseschnittstelle sind batterieintern über eine Busleitung mit dem Batteriemanagementsystem (BMS) verbunden, vorzugsweise über eine CAN-Busleitung. Die Fahrzeugbusschnittstelle und die Diagnoseschnittstelle bzw. On-Board-Diagnoseschnittstelle befinden sich an einer Gehäuseaussenseite der Antriebsbatterie oder in einer Aussparung im Gehäuse der Antriebsbatterie. Beide Schnittstellen sind kontaktbehaftet und vorzugsweise als Buchse ausgeführt.

Ein sich vorzugsweise automatisch mit einer der beiden Schnittstellen datentechnisch verbindender Anschlusspunkt leitet dann die darüber empfangenen Antriebsbatteriedaten, insbesondere die Batterietemperaturwerte, und/oder eine Übertemperaturwarnung weiter an eine übergeordnete Gefahrenmeldestelle, koordiniert durch einen batterieexternen Busmaster. In diesem Fall übernimmt dann letzterer, insbesondere ein CAN-Busmaster, die Rolle der Fahrzeugsteuerung, während das Batteriemanagementsystem (BMS) die gewohnte Rolle eines Busteilnehmers (Slave) wahrnimmt.

Der batterieexterne Busmaster kann in der übergeordneten Gefahrenmeldestelle selbst angeordnet sein. In diesem Fall handelt es sich beim Busmaster um einen zentralenseitigen Busmaster. Alternativ kann ein batterieexterner Busmaster dezentral jeweils in einem Anschlusspunkt in einem zur überwachten Lagerung einer Antriebsbatterie vorgesehenen Lagerfach angeordnet sein. In diesem Fall koordiniert der jeweilige anschlusspunktseitige Busmaster den Datenverkehr zwischen dem jeweils verbundenen Batteriemanagementsystem (BMS) und der übergeordneten Gefahrenmeldestelle.

Ist das Batteriemanagementsystem einer zur Einlagerung oder zur Zwischenlagerung vorgesehenen Antriebsbatterie bereits dazu eingerichtet, eine Übertemperaturwarnung im Falle einer detektierten zu hohen Batteriezellentemperatur und/oder einer zu hohen Batteriemodultemperatur und/oder einer zu hohen Batterietemperatur der gesamten Antriebsbatterie, wie z.B. von 80°C oder 100°C, an der Fahrzeugbus- und/oder Diagnoseschnittstelle auszugeben, so reduziert sich das Datenaufkommen zu der übergeordneten Gefahrenmeldestelle drastisch. Eine Weiterleitung aktueller Batterietemperaturwerte und gegebenenfalls weiterer Antriebsbatteriedaten ist dann nicht erforderlich. In diesem Fall kann davon ausgegangen werden, dass die Antriebsbatterie in Ordnung ist. Batterieintern übernimmt dann das Batteriemanagementsystem die thermische Überwachung der jeweiligen Antriebsbatterie.

Ist der zentralenseitige Busmaster in der übergeordneten Gefahrenmeldestelle angeordnet oder datentechnisch mit einem derartigen zentralenseitige Busmaster verbunden, so kann die Gefahrenmeldestelle dazu eingerichtet sein, mithilfe einer datentechnisch erreichbaren oder dort hinterlegten Tabelle die Lagerfachposition einer im Regallagersystem eingelagerten Antriebsbatterie zu bestimmen. Die Tabelle kann z.B. Lagerfachpositionen im Regallagersystem umfassen, denen Busadressen oder eindeutigen Gerätekennungen der Batteriemanagementsysteme (BMS) von aktuell eingelagerten Antriebsbatterien zugeordnet sind. Die Tabelle wird fortlaufend von einem IT-gestützten Lagerhaltungssystem des gesamten Regallagersystems aktualisiert. Im Falle eines von einer schadhaften Antriebsbatterie zusammen mit der Busadresse oder der Gerätekennung weitergeleiteten zu hohen Batterietemperaturwerts und/oder Übertemperaturwarnung kann dann die Gefahrenmeldestelle eine Gefahrenmeldung zusammen mit der ermittelten Lagerfachposition vor Ort, z.B. auf einer Anzeige der Gefahrenmeldestelle, oder an eine damit verbundene Leitstelle auszugeben.

Die Aufgabe der Erfindung wird weiter durch eine erfindungsgemässe Verwendung einer von aussen zugänglichen Fahrzeugbus- oder Diagnoseschnittstelle einer Antriebsbatterie für Elektrofahrzeuge zur thermischen Überwachung der Antriebsbatterie gelöst, wenn diese in einem Regallagersystem mit einer Vielzahl von Lagerfächern eingelagert wird. Zu deren thermischen Überwachung werden Antriebsbatteriedaten und/oder eine Übertemperaturwarnung von einem Batteriemanagementsystem der Antriebsbatterie einem dazu eingerichteten batterieexternen Busmaster, insbesondere einem batterieexternen CAN-Busmaster, bereitgestellt. Der batterieexterne Busmaster ist einerseits datentechnisch über einen im Bereich des Lagerfachs bzw. im Lagerfach der eingelagerten Antriebsbatterie angeordneten Anschlusspunkt mit der von aussen zugänglichen Fahrzeugbus- oder Diagnoseschnittstelle verbunden und andererseits zur Weiterleitung der vom Batteriemanagementsystem der eingelagerten Antriebsbatterie bereitgestellten Antriebsbatteriedaten, insbesondere von Batterietemperaturwerten, und/oder einer Übertemperaturwarnung datentechnisch mit einer übergeordneten Gefahrenmeldestelle verbunden. Im Falle einer Übertemperatur wird eine Gefahrenmeldung gegebenenfalls zusammen mit einer Lagerfachposition der eingelagerten Antriebsbatterie im Regallagersystem durch die Gefahrenmeldestelle ausgegeben.

Schliesslich wird die Aufgabe der Erfindung durch ein Verfahren zur thermischen Überwachung einer Vielzahl von Antriebsbatterien für Elektrofahrzeuge, insbesondere von Lithium-Ionen- oder Natrium-Ionen-Antriebsbatterien, gelöst, insbesondere auf ein thermisches Versagen hin. Die Antriebsbatterien werden bzw. sind in einem Regallagersystem mit einer Vielzahl von Lagerfächern eingelagert. Die Antriebsbatterien sind zur Anbringung in Elektrofahrzeugen vorgesehen und umfassen jeweils eine Mehrzahl von Batteriemodulen mit einer Mehrzahl von Batteriezellen, ein Batteriemanagementsystem sowie eine Anschlussmöglichkeit an eine Fahrzeugsteuerung des Elektrofahrzeugs. Die Antriebsbatterien werden nach ihrer Einlagerung in einem Lagerfach über ihre jeweilige, von aussen zugängliche Fahrzeugbus- oder Diagnoseschnittstelle insbesondere automatisch datentechnisch mit einer übergeordneten Gefahrenmeldestelle verbunden, um aktuelle Antriebsbatteriedaten, insbesondere Batterietemperaturwerte, und/oder eine Übertemperaturwarnung von dem Batteriemanagementsystem einer jeweils eingelagerten Antriebsbatterie zur thermischen Überwachung zu empfangen. Es wird von der Gefahrenmeldestelle im Falle einer Übertemperatur eine Gefahrenmeldung vor Ort und/oder an eine Leitstelle ausgegeben, gegebenenfalls zusammen mit einer Lagerfachposition der im Regallagersystem eingelagerten Antriebsbatterie.

### Ausgestaltungen der Erfindung

Nach einer Ausführungsform der erfindungsgemässen Anlage ist in zumindest einem Teil der Lagerfächer ein Anschlusspunkt angeordnet. Der jeweilige Anschlusspunkt ist derart im oder am jeweiligen Lagerfach angeordnet, insbesondere an einer Rückwand des jeweiligen Lagerfachs, dass die Fahrzeugbus- oder Diagnoseschnittstelle einer jeweils ordnungsgemäss eingelagerten Antriebsbatterie einen gegenüberliegenden Anschlusspunkt zur Erfassung der Antriebsbatteriedaten und/oder einer Übertemperaturwarnung kontaktiert. Der jeweilige Anschlusspunkt ist über eine Kommunikationsleitung mit der übergeordneten Gefahrenmeldestelle verbunden und dazu eingerichtet, die empfangenen Antriebsbatteriedaten und/oder eine empfangene Übertemperaturwarnung an die Gefahrenmeldestelle weiterzuleiten.

Typischerweise erfolgt die Einlagerung der Antriebsbatterien vollautomatisiert mithilfe von Regalbediengeräten. Letztere sind dazu eingerichtet, eine einzulagernde Antriebsbatterie in ein dafür vorgesehenes Lagerfach millimetergenau einzubringen, so dass die von aussen zugängliche Fahrzeugbus- oder Diagnoseschnittstelle mit einem darauf abgestimmten, gegenüberliegenden Stecker oder mit einer darauf abgestimmten, gegenüberliegenden Buchse eines an der Rückwand der Lagerfachs angeordneten Anschlusspunktes kontaktiert. Vorzugsweise ist die Fahrzeugbusschnittstelle als CAN-Busschnittstelle mit einer fünfpoligen M12-Anschlussbuchse ausgeführt. Die Diagnoseschnittstelle ist vorzugsweise eine OBD-Diagnoseschnittstelle vom standardisierten Typ OBD-2 oder OBD-3. Die Diagnoseschnittstelle vom Typ OBD-2 kann neben einer CAN-Busschnittstelle einen J1850-Bus sowie weitere Leitungen, wie eine sogenannte K-Leitungen und Versorgungsspannungsleitungen, umfassen.

Alternativ oder zusätzlich können in einem Lagerfach Führungsschienen und/oder Kulissen angeordnet sein, welches eine exakte und vollständige Kontaktierung erlauben. Zusätzlich kann im Lagerfach eine mechanische oder elektromechanische Vorrichtung angeordnet sein, welche im Falle einer vorhandenen Schutzabdeckung an einer Fahrzeugbusschnittstelle oder an einer Diagnoseschnittstelle der Antriebsbatterie diese entfernt und gegebenenfalls wieder anbringt.

Vorzugsweise ist bei den nachfolgenden Ausführungsformen die jeweilige beschriebene Fahrzeugbus- oder Diagnoseschnittstelle eine CAN-Fahrzeugbus- oder Diagnoseschnittstelle, die batterieseitige Busleitung eine batterieseitige CAN-Busleitung und der Busmaster, d.h. ein zentralenseitiger, anschlusspunktseitiger oder modulseitiger Busmaster, ein CAN-Busmaster.

Einer weiteren Ausführungsform zufolge ist die Kommunikationsleitung eine zentralenseitige Busleitung, vorzugsweise eine CAN-Busleitung. Der CAN-Bus (für Controller Area Network) ist ein standardisiertes (siehe z.B. ISO 11898-1, ISO 11898-2 und ISO 11898-3) serielles Bussystem und gehört zu den Feldbussen. Im einfachsten Fall umfasst eine CAN-Leitung zwei verdrillte Adern, CAN_HIGH (CAN_H) und CAN_LOW (CAN_L), für eine symmetrische Signalübertragung. Typischerweise ist noch eine dritte Ader, eine CAN_GND (Masse), vorhanden, oft zusammen mit einer vierten Ader zur 5V- oder 12V-Spannungsversorgung.

Es ist die jeweilige Fahrzeugbus- oder Diagnoseschnittstelle als Buchse oder als Stecker ausgebildet und umfasst zumindest eine Schnittstelle zu einer batterieseitigen Busleitung zur Verbindung mit dem Batteriemanagementsystem zur Bereitstellung der Antriebsbatteriedaten und/oder einer Übertemperaturwarnung umfasst. Die batterieseitige Busleitung ist dabei mit dem Batteriemanagementsystem verbunden. Der jeweilige Anschlusspunkt umfasst einen auf die Buchse bzw. auf den Stecker der jeweiligen Fahrzeugbus- oder Diagnoseschnittstelle abgestimmten Stecker bzw. Buchse zur möglichen elektrischen Kontaktierung. Der jeweilige Anschlusspunkt ist im kontaktierten Zustand zur elektrischen Verbindung der batterieseitigen Busleitung mit der zentralenseitigen Busleitung eingerichtet. Im Falle eines CAN-Busses sind dann alle batterieseitigen CAN-Busleitungen der jeweils eingelagerten Antriebsbatterien nach erfolgter elektrischer Kontaktierung elektrisch parallel an der zentralenseitigen CAN-Busleitung angeschaltet. Die Gefahrenmeldestelle weist hierzu einen zentralenseitigen Busmaster auf oder die Gefahrenmeldestelle ist mit einem solchen Busmaster datentechnisch verbunden. Der zentralenseitige Busmaster ist dann dazu eingerichtet, die Batteriemanagementsysteme aller angeschlossenen Antriebsbatterien wiederholt zu adressieren, um von diesen die jeweiligen Antriebsbatteriedaten abzufragen. Vorzugsweise ist der zentralenseitige Busmaster auch dazu eingerichtet, eine von einem jeweiligen Batteriemanagement priorisiert gesendete Übertemperaturwarnung zu empfangen.

Gemäss einer weiteren Ausführungsform weist der jeweilige Anschlusspunkt im Vergleich zur vorherigen Ausführungsform einen zwischen dem Stecker bzw. eine zwischen der Buchse und der zentralenseitigen Busleitung geschalteten anschlusspunktseitigen Busmaster auf. Der anschlusspunktseitige Busmaster ist dazu eingerichtet, die Antriebsbatteriedaten und/oder eine Übertemperaturwarnung vorzugsweise fortlaufend von der Schnittstelle zur batterieseitigen Busleitung der jeweiligen kontaktierten Fahrzeugbus- oder Diagnoseschnittstelle zu empfangen oder anzufordern. Zudem ist der anschlusspunktseitige Busmaster dazu eingerichtet, die empfangenen Antriebsbatteriedaten und/oder eine empfangene Übertemperaturwarnung über die zentralenseitige Busleitung an einen zentralenseitigen Busmaster der übergeordneten Gefahrenmeldestelle weiterzuleiten. Der zentralenseitige Busmaster ist dann dazu eingerichtet, die anschlussseitigen Busmaster wiederholt zu adressieren, um von diesen die jeweiligen Antriebsbatteriedaten abzufragen. Vorzugsweise ist der zentralenseitige Busmaster auch dazu eingerichtet, eine von einem jeweiligen Batteriemanagement priorisiert gesendete Übertemperaturwarnung zu empfangen.

Nach einer vorteilhaften Ausführungsform ist Anlage eine Brandmeldeanlage und die Gefahrenmeldestelle eine Brandmeldezentrale. Zudem ist die Kommunikationsleitung eine Melderlinie, insbesondere eine Zweidraht-Melderlinie. Es sind die in den Lagerfächern angeordneten Anschlusspunkte sowie die Brandmeldezentrale gemeinsam an der Melderlinie angeschaltet. Weiter ist die jeweilige Fahrzeugbus- oder Diagnoseschnittstelle als Buchse bzw. als Stecker ausgebildet und umfasst zumindest eine Schnittstelle zu einer batterieseitigen Busleitung zur Bereitstellung der Antriebsbatteriedaten und/oder einer Übertemperaturwarnung. Die batterieseitige Busleitung ist dabei mit dem Batteriemanagementsystem verbunden. Weiter umfasst der jeweilige Anschlusspunkt einen auf die Buchse bzw. einen auf den Stecker der jeweiligen Fahrzeugbus- oder Diagnoseschnittstelle abgestimmten Stecker bzw. eine darauf abgestimmte Buchse zur möglichen elektrischen Kontaktierung. Zudem weist der jeweilige Anschlusspunkt einen zwischen dem Stecker bzw. einen zwischen der Buchse und der Melderlinie geschalteten anschlusspunktseitigen Busmaster und eine damit datentechnisch verbundene Melderbus-Anschaltung auf. Der jeweilige anschlusspunktseitige Busmaster ist dazu eingerichtet, die Antriebsbatteriedaten und/oder eine Übertemperaturwarnung vorzugsweise fortlaufend von der Schnittstelle zur batterieseitigen Busleitung der jeweiligen kontaktierten Fahrzeugbus- oder Diagnoseschnittstelle zu empfangen oder anzufordern, und weiter dazu eingerichtet ist, die empfangenen Antriebsbatteriedaten und/oder eine empfangene Übertemperaturwarnung an die Melderbus-Anschaltung weiterzuleiten. Schliesslich ist die jeweilige Melderbus-Anschaltung über die Melderlinie mit der übergeordneten Brandmeldezentrale verbunden und dazu eingerichtet, die empfangenen Antriebsbatteriedaten und/oder eine empfangene Übertemperaturwarnung an die übergeordnete Brandmeldezentrale weiterzuleiten.

Die Melderbus-Anschaltung kann einen geeignet programmierten Mikrocontroller umfassen. Sie kann alternativ einen Ein-/Ausgabebaustein für eine automatisch adressierte Brandmelderlinie umfassen, wie z.B. einen FDCIO222- oder FDCIO224-Ein-/Ausgabebaustein von Siemens zum Anschliessen an eine FDnet- oder C-NET-Brandmelderlinie von Siemens.

Der besondere Vorteil liegt hier in der Kombination einer übergeordneten, jahrzehntelang erprobten und äusserst zuverlässig arbeitenden Brandmeldeanlagentechnik mit dezentral auf der Lagerfachseite agierenden CAN-Busmastern. Letztere erfassen lediglich die für eine thermische Überwachung der angeschlossenen Antriebsbatterie wesentlichen Antriebsbatteriedaten und/oder vorzugsweise nur eine Übertemperaturwarnung, die dann priorisiert durch das Brandmeldeübertragungsprotokoll über die Melderbus-Anschaltung der Brandmeldezentrale sehr schnell bereitgestellt werden kann.

Einer weiteren Ausführungsform zufolge ist die Kommunikationsleitung eine zentralenseitige Busleitung. Die jeweilige Fahrzeugbus- oder Diagnoseschnittstelle ist wiederum als Buchse oder als Stecker ausgebildet, und umfasst zumindest eine Schnittstelle zu einer batterieseitigen Busleitung zur Bereitstellung der Antriebsbatteriedaten und/oder einer Übertemperaturwarnung. Die batterieseitige Busleitung ist dabei mit dem Batteriemanagementsystem verbunden. Es ist auf der Fahrzeugbus- oder Diagnoseschnittstelle einer jeweils eingelagerten Antriebsbatterie ein Aufsteckmodul appliziert, welches sich nach ordnungsgemässer Einlagerung der Antriebsbatterie in räumlicher Nähe zu einem jeweiligen Anschlusspunkt befindet. Das jeweilige Aufsteckmodul umfasst einen auf die Buchse bzw. einen auf den Stecker der jeweiligen Fahrzeugbus- oder Diagnoseschnittstelle abgestimmten Stecker bzw. eine darauf abgestimmte Buchse zur möglichen elektrischen Kontaktierung.

Das jeweilige Aufsteckmodul weist einen modulseitigen Busmaster, hier insbesondere einen modulseitigen CAN-Busmaster, und eine datentechnisch damit verbundene erste funkgestützte Datenübertragungseinheit auf. Der modulseitige Busmaster ist dazu eingerichtet, die Antriebsbatteriedaten und/oder eine Übertemperaturwarnung vorzugsweise fortlaufend von der Schnittstelle zur batterieseitigen Busleitung der jeweils kontaktierten Fahrzeugbusschnittstelle oder Diagnoseschnittstelle zu empfangen oder anzufordern. Zudem ist der modulseitige Busmaster dazu eingerichtet, die empfangenen Antriebsbatteriedaten und/oder eine empfangene Übertemperaturwarnung zur Ausgabe über Funk an die erste funkgestützte Datenübertragungseinheit weiterzuleiten.

Weiter weist der jeweilige Anschlusspunkt eine zweite funkgestützte Datenübertragungseinheit und einen datentechnisch damit verbundenen anschlusspunktseitigen Busmaster, insbesondere einen anschlusspunktseitigen CAN-Busmaster, auf. Der jeweilige anschlusspunktseitige Busmaster ist dazu eingerichtet, die von der ersten funkgestützten Datenübertragungseinheit an die zweite funkgestützte Datenübertragungseinheit übertragenen Antriebsbatteriedaten und/oder eine übertragene Übertemperaturwarnung zu empfangen und weiter dazu eingerichtet, die empfangenen Antriebsbatteriedaten und/oder eine empfangene Übertemperaturwarnung über die zentralenseitige Busleitung an die Gefahrenmeldestelle weiterzuleiten. Der Abstand zwischen der ersten funkgestützten Datenübertragungseinheit einer ordnungsgemäss eingelagerten Antriebsbatterie und der zweiten funkgestützten Datenübertragungseinheit eines zugehörigen Anschlusspunktes beträgt dabei maximal 1 m.

Der Kommunikationsbus basiert vorzugsweise auf einem CAN-Bus-Standard. Er kann alternativ z.B. auf einem BACnet-, Ethernet Powerlink-, KNX-, Modbus-, PROFIBUS- oder SafetyBUS-Feldbus basieren. Die beiden funkgestützten Datenübertragungseinheiten basieren z.B. auf einem Bluetooth-, Thread- oder WLAN-Standard.

Der besondere Vorteil liegt darin, dass keine exakte Ausrichtung einer einzulagernden Antriebsbatterien zum Anschlusspunkt im dortigen Lagerfach erforderlich ist.

Nach einer Ausführungsform ist die Anlage eine Brandmeldeanlage. Die Gefahrenmeldestelle ist eine Brandmeldezentrale und die Kommunikationsleitung eine Melderlinie, insbesondere eine Zweidraht-Melderlinie, an welcher die in den Lagerfächern angeordneten Anschlusspunkte und die Brandmeldezentrale gemeinsam angeschaltet sind. Die jeweilige Fahrzeugbus- oder Diagnoseschnittstelle ist als Buchse bzw. als Stecker ausgebildet und umfasst zumindest eine Schnittstelle zu einer batterieseitigen Busleitung, insbesondere zu einer batterieseitigen CAN-Busleitung, zur Bereitstellung der Antriebsbatteriedaten und/oder einer Übertemperaturwarnung. Die batterieseitige Busleitung ist dabei mit dem Batteriemanagementsystem verbunden. Es ist auf der Fahrzeugbus- oder Diagnoseschnittstelle einer jeweils eingelagerten Antriebsbatterie ein Aufsteckmodul appliziert.

Das jeweilige applizierte Aufsteckmodul befindet sich in räumlicher Nähe zu einem jeweiligen Anschlusspunkt, wobei das jeweilige Aufsteckmodul einen auf die Buchse bzw. auf den Stecker der jeweiligen Fahrzeugbus- oder Diagnoseschnittstelle abgestimmten Stecker bzw. eine darauf abgestimmte Buchse zur möglichen elektrischen Kontaktierung umfasst. Das jeweilige Aufsteckmodul weist einen modulseitigen Busmaster, insbesondere einen modulseitigen CAN-Busmaster, und eine datentechnisch damit verbundene erste funkgestützte Datenübertragungseinheit auf.

Der modulseitige Busmaster ist dazu eingerichtet, die Antriebsbatteriedaten und/oder eine Übertemperaturwarnung vorzugsweise fortlaufend von der Schnittstelle zur batterieseitigen Busleitung der jeweils kontaktierten Fahrzeugbusschnittstelle oder Diagnoseschnittstelle zu empfangen oder anzufordern, und weiter dazu eingerichtet ist, die empfangenen Antriebsbatteriedaten und/oder eine empfangene Übertemperaturwarnung zur Ausgabe über Funk an die erste funkgestützte Datenübertragungseinheit weiterzuleiten.

Weiter weist der jeweilige Anschlusspunkt eine zweite funkgestützte Datenübertragungseinheit und eine datentechnisch damit verbundene Melderbus-Anschaltung auf. Die Melderbus-Anschaltung ist dazu eingerichtet, die von der ersten funkgestützten Datenübertragungseinheit an die zweite funkgestützte Datenübertragungseinheit übertragenen Antriebsbatteriedaten und/oder eine übertragene Übertemperaturwarnung zu empfangen und ist zudem dazu eingerichtet, die empfangenen Antriebsbatteriedaten und/oder eine empfangene Übertemperaturwarnung über die Melderlinie an die Brandmeldezentrale zu übertragen.

Die Melderbus-Anschaltung kann einen geeignet programmierten Mikrocontroller umfassen. Sie kann alternativ einen Ein-/Ausgabebaustein für eine automatisch adressierte Brandmelderlinie umfassen, wie z.B. einen FDCIO222- oder FDCIO224-Ein-/Ausgabebaustein von Siemens zum Anschliessen an eine FDnet- oder C-NET-Brandmelderlinie von Siemens.

Insbesondere beträgt der Abstand zwischen der ersten funkgestützten Datenübertragungseinheit einer ordnungsgemäss eingelagerten Antriebsbatterie und der zweiten funkgestützten Datenübertragungseinheit eines zugehörigen Anschlusspunktes maximal 1 m. Die beiden funkgestützten Datenübertragungseinheiten basieren z.B. auf einem Bluetooth-, Thread- oder WLAN-Standard.

Der besondere Vorteil liegt darin, dass keine exakte Ausrichtung einer einzulagernden Antriebsbatterien zum Anschlusspunkt im dortigen Lagerfach erforderlich ist.

Nach einer besonders vorteilhaften Ausführungsform sind die erste und zweite funkgestützte Datenübertragungseinheit funkgestützte Energie-/Datenübertragungseinheiten. Sie sind zudem dazu eingerichtet, elektrische Energie von der Kommunikationsleitung über den jeweiligen Anschlusspunkt und dann weiter auf induktiv gekoppeltem Wege an das jeweilige Aufsteckmodul zur elektrischen Versorgung des jeweiligen Aufsteckmoduls und/oder des daran angeschlossenen Batteriemanagementsystems der eingelagerten Antriebsbatterie zu übertragen. Alternativ oder zusätzlich sind die beiden funkgestützten Energie-/Datenübertragungseinheit dazu eingerichtet, elektrische Energie von der jeweiligen Antriebsbatterie über die Fahrzeugbus- oder Diagnoseschnittstelle zum jeweiligen applizierten Aufsteckmodul und weiter auf induktiv gekoppeltem Wege zur elektrischen Versorgung des jeweiligen Anschlusspunktes zu übertragen. Die induktive Daten- und Energieübertragung kann z.B. auf einem ISO/IEC 15693-Standard oder auf einem ISO/IEC 14443-Standard basieren.

Der besondere Vorteil liegt darin, dass einerseits eine Ladeaufrechterhaltung einer eingelagerten Antriebsbatterie bewerkstelligt werden kann, zumindest jedoch eine elektrische Stromversorgung des Batteriemanagementsystems sowie ggf. daran angeschlossener Batteriemodulmanagementeinheiten, um eine fortlaufende Diagnose aller Batteriemodule mit ihren jeweiligen Batteriezellen zu ermöglichen.

Ein weiterer besonderer Vorteil liegt darin, dass auf umgekehrtem Wege über die induktiv gekoppelte Schnittstelle eine elektrische Versorgung zumindest des anschlussseitigen Busmasters möglich ist. Die einem Anschlusspunkt auf diese Weise bereitgestellte elektrische Leistung beträgt maximal 5 Watt, vorzugsweise maximal 1 Watt.

Einer weiteren Ausführungsform zufolge umfasst die Kommunikationsleitung einen elektrischen Leckwellenleiter, insbesondere ein Schlitzkabel, zum Empfangen und Senden von Funkwellen, wobei der elektrische Leckwellenleiter in oder an den für die Einlagerung der Antriebsbatterien vorgesehenen Lagerfächern entlang verläuft. Es umfasst die Gefahrenmeldestelle eine Sende-/Empfangseinheit zum Anschliessen des elektrischen Leckwellenleiters. Alternativ kann die Gefahrenmeldestelle mit einer solchen datentechnisch verbunden sein. Somit bildet der elektrische Leckwellenleiter zusammen mit der Sende-/Empfangseinheit einen gemeinsamen Anschlusspunkt, um die von den jeweiligen eingelagerten Antriebsbatterien stammenden Antriebsbatteriedaten und/oder eine von den jeweiligen Antriebsbatterien stammende Übertemperaturwarnung zu empfangen.

Dabei ist auf der Fahrzeugbus- oder Diagnoseschnittstelle einer jeweils eingelagerten Antriebsbatterie ein Aufsteckmodul appliziert, welches einen auf die Buchse bzw. auf den Stecker der jeweiligen Fahrzeugbus- oder Diagnoseschnittstelle abgestimmten Stecker bzw. eine darauf abgestimmte Buchse zur möglichen elektrischen Kontaktierung umfasst. Das jeweilige Aufsteckmodul weist weiter einen modulseitigen Busmaster, insbesondere einen modulseitigen CAN-Busmaster, und eine datentechnisch damit verbundene erste funkgestützte Datenübertragungseinheit auf. Der modulseitige Busmaster ist dazu eingerichtet, die Antriebsbatteriedaten und/oder eine Übertemperaturwarnung vorzugsweise fortlaufend von einer Schnittstelle zu einer batterieseitigen Busleitung, insbesondere zu einer batterieseitigen CAN-Busleitung, der jeweiligen kontaktierten Fahrzeugbus- oder Diagnoseschnittstelle zu empfangen oder anzufordern. Die batterieseitige Busleitung ist dabei mit dem Batteriemanagementsystem verbunden. Weiter ist der modulseitige Busmaster dazu eingerichtet, die empfangenen Antriebsbatteriedaten und/oder die empfangene Übertemperaturwarnung zur Ausgabe über Funk an die erste funkgestützte Datenübertragungseinheit weiterzuleiten. Die in Form von Funkwellen ausgesandten Antriebsbatteriedaten sowie die ausgesandte Übertemperaturwarnung werden dann vom elektrischen Leckwellenleiter empfangen und von diesem an die Sende-/Empfangseinheit weitergeleitet. Letztere überträgt dann diese an die damit verbundene übergeordnete Gefahrenmeldestelle.

Die ersten funkgestützten Datenübertragungseinheiten sowie die Sende-/Empfangseinheit basieren z.B. auf einem Bluetooth-, Thread- oder WLAN-Standard.

Der besondere Vorteil bei dieser Ausführungsform ist, dass auf einen Anschlusspunkt in jedem für eine einzulagernde Antriebsbatterie vorgesehenen Lagerfach verzichtet werden dann.

Nach einer weiteren Ausführungsform ist die Gefahrenmeldestelle dazu eingerichtet, die einem jeweiligen Lagerfach zuzuordnende Lagerfachposition mittels einer Laufzeitmessung eines Testsignals von der Sende-/Empfangseinheit entlang des elektrischen Leckwellenleiters zu einem adressierten Anschlusspunkt und auf umgekehrtem Wege zurück zu ermitteln. Hierzu werden die Laufzeitdifferenzen zwischen dem Einspeisen eines Funksignals in den elektrischen Leckwellenleiter durch die Sende-/Empfangseinheit und dem Empfangen des von einer jeweils adressierten ersten funkgestützten Datenübertragungseinheit ausgesendeten Antwortsignals gemessen und zusammen mit einer zugehörigen Lagerfachkennung eines Lagerfachs, in welchem die jeweilige Antriebsbatterie mit ihrem Aufsteckmodul und der ersten funkgestützten Datenübertragungseinheit angeordnet ist, in einer Tabelle gespeichert.

Zur Lokalisierung eines antwortenden Anschlusspunktes im Regallagersystems wird dann in vorteilhafter Weise die jeweilige Lagerfachkennung basierend auf seiner Adresse und der zugehörigen Laufzeitdifferenz in der Tabelle bestimmt. Weiterhin kann bei dieser Ausführungsform vorteilhaft auf einen Anschlusspunkt in jedem für eine einzulagernde Antriebsbatterie vorgesehenen Lagerfach verzichtet werden.

Einer weiteren Ausführungsform zufolge weist die thermische Überwachungsanlage eine Mehrzahl von im Bereich des Regallagersystems verteilt angeordneten funkgestützten Anschlusspunkten auf. Letztere sind entweder über eine drahtgebundene Kommunikationsleitung im Sinne einer «Bridge» direkt mit einem Gateway verbunden. Alternativ oder zusätzlich können die funkgestützten Anschlusspunkte als funkgestütztes Maschennetzwerk mittelbar mit einem funkgestützten Gateway verbunden sein. Die Gefahrenmeldestelle ist datentechnisch mit dem Gateway verbunden oder weist eine solche auf. Die funkgestützten Anschlusspunkte sind dazu eingerichtet, die von den jeweiligen eingelagerten Antriebsbatterien stammenden Antriebsbatteriedaten und/oder eine von den jeweiligen Antriebsbatterien stammende Übertemperaturwarnung zu empfangen und an das Gateway zu übertragen. Das Gateway ist dazu eingerichtet, die empfangenen Antriebsbatteriedaten und/oder eine empfangene Übertemperaturwarnung dann an die übergeordnete Gefahrenmeldestelle weiterzuleiten. Die im Bereich des Regallagersystems verteilt angeordneten funkgestützten Anschlusspunkte sowie das datentechnisch mit diesen verbundene funkgestützte können z.B. auf einem WLAN- oder auf einem Bluetooth-Mesh- oder Thread-Mesh-Standard basieren.

Weiter ist auf der Fahrzeugbus- oder Diagnoseschnittstelle einer jeweils eingelagerten Antriebsbatterie ein Aufsteckmodul appliziert. Das jeweilige Aufsteckmodul umfasst einen auf die Buchse bzw. auf den Stecker der jeweiligen Fahrzeugbus- oder Diagnoseschnittstelle abgestimmten Stecker bzw. eine darauf abgestimmte Buchse zur möglichen elektrischen Kontaktierung umfasst. Das jeweilige Aufsteckmodul weist weiter einen modulseitigen Busmaster, insbesondere einen modulseitigen CAN-Busmaster, und eine datentechnisch damit verbundene erste funkgestützte Datenübertragungseinheit auf. Der modulseitige Busmaster ist dazu eingerichtet, die Antriebsbatteriedaten und/oder ein Übertemperaturwarnung vorzugsweise fortlaufend von einer Schnittstelle zu einer batterieseitigen Busleitung, insbesondere zu einer batterieseitigen CAN-Busleitung, der jeweiligen kontaktierten Fahrzeugbus- oder Diagnoseschnittstelle zu empfangen oder anzufordern. Die batterieseitige Busleitung ist dabei mit dem Batteriemanagementsystem verbunden. Weiter ist der jeweilige Busmaster dazu eingerichtet ist, die empfangenen Antriebsbatteriedaten und/oder eine empfangene Übertemperaturwarnung zur Ausgabe über Funk an die erste funkgestützte Datenübertragungseinheit weiterzuleiten.

Mit «räumlicher Nähe» ist bei dieser Ausführungsform ein maximaler Abstand von einer jeweiligen ersten funkgestützten Datenübertragungseinheit zu einem funkgestützten Anschlusspunkt von 100 Meter, insbesondere von maximal 30 Meter gemeint.

Der besondere Vorteil liegt auch hier darin, dass auf einen Anschlusspunkt in jedem für eine einzulagernde Antriebsbatterie vorgesehenen Lagerfach verzichtet werden dann.

Nach einer Ausführungsform ist die einem jeweiligen Lagerfach zugeordnete Lagerfachposition im jeweiligen Anschlusspunkt eines Lagerfachs gespeichert, wie z.B. in einem nichtflüchtigen Speicher eines Mikrocontrollers in einem Anschlusspunkt. Ein solcher Mikrocontroller kann z.B. dazu eingerichtet sein, die Funktion eines anschlussseitigen Busmasters auszuführen.

Schliesslich kann die einem jeweiligen Lagerfach zugeordnete Lagerfachposition für die einzulagernde Antriebsbatterie auch im jeweiligen applizierten Aufsteckmodul gespeichert sein, wie z.B. in einem nichtflüchtigen Speicher eines dortigen Mikrocontrollers.

### Exemplarische Ausführungsbeispiele der Zeichnung

Die Erfindung sowie vorteilhafte Ausführungen der vorliegenden Erfindung werden am Beispiel der nachfolgenden Figuren erläutert. Dabei zeigen:
- FIG 1: schematisch den Aufbau einer Antriebsbatterie für ein Elektrofahrzeug,
- FIG 2: ein Beispiel einer erfindungsgemässen Anlage zur thermischen Überwachung einer Vielzahl von in dem Regallagersystem eingelagerten Antriebsbatterien,
- FIG 3: eine Aufsicht auf das beispielhafte, von beiden Seiten her mit Antriebsbatterien bestückbare Regallagersystem gemäss FIG 2 sowie die Anschlusspunkte der Anlage zur thermischen Überwachung der Antriebsbatterien,
- FIG 4 - FIG 6: beispielhafte Anschlussmöglichkeiten zum Anschluss einer von aussen zugänglichen Fahrzeugbus- oder Diagnoseschnittstelle einer Antriebsbatterie an einen regallagerseitigen Anschlusspunkt gemäss der Erfindung,
- FIG 7: eine Aufsicht auf ein beispielhaftes Regallagersystem mit berührungslos arbeitenden Anschlusspunkten zum Anschluss einer jeweils eingelagerten Antriebsbatterie gemäss der Erfindung,
- FIG 8: ein Beispiel für einen regallagerseitigen, drahtlos arbeitenden Anschlusspunkt in Funkverbindung mit einem auf einer Fahrzeugbus- oder Diagnoseschnittstelle aufgesteckten Aufsteckmodul gemäss der Erfindung,
- FIG 9: ein weiteres Beispiel für einen drahtlos arbeitenden Anschlusspunkt in induktiv gekoppelter Funkverbindung mit einem auf einer Fahrzeugbus- oder Diagnoseschnittstelle aufgesteckten Aufsteckmodul gemäss der Erfindung,
- FIG 10: ein Beispiel einer erfindungsgemässen Anlage zur thermischen Überwachung von eingelagerten und mit Aufsteckmodulen versehenen Antriebsbatterien und mit einem im Regallagersystem verlegten elektrischen Leckwellenleiter, und
- FIG 11: ein weiteres Beispiel einer erfindungsgemässen Anlage zur thermischen Überwachung von eingelagerten Antriebsbatterien mit im Bereich des Regallagersystems verteilt angeordneten funkgestützten Anschlusspunkten.

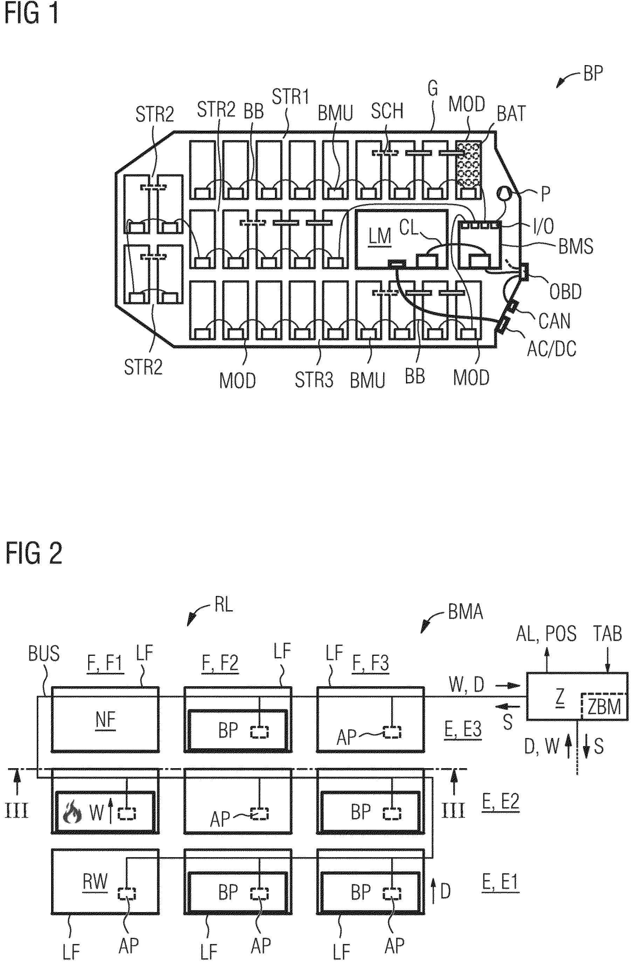

FIG 1 zeigt schematisch den Aufbau einer Antriebsbatterie BP zur Anbringung an ein Elektrofahrzeug. Im vorliegenden Beispiel weist die gezeigte Antriebsbatterie BP, die auch als Traktionsbatterie oder als Batterie Pack bezeichnet werden, ein Antriebsbatteriegehäuse G auf. Im Antriebsbatteriegehäuse G sind drei Batteriestränge STR1-STR3 mit jeweils neun Batteriemodulen MOD sowie ein Laderegler LM zum Laden der Antriebsbatterie BP aufgenommen. Die einzelnen Batteriemodule MOD sind durch Stromschienen SCH miteinander verbunden und weisen jeweils eine Vielzahl von Batteriezellen BAT auf. Der Laderegler LM ist mit einem Batterieladeanschluss AC/DC verbunden, der seinerseits mit einer am Elektrofahrzeug vorhandenen Ladebuchse zum Einspeisen von Ladestrom von einer Ladesäule verbunden ist.

Jedes Batteriemodul MOD verfügt über eine eigene Batteriemodulmanagementeinheit BMU zur Überwachung der an den Batteriezellen BAT anliegenden elektrischen Spannungen sowie zur Überwachung der im jeweiligen Batteriemodul MOD vorherrschenden Temperatur. Die Batteriemodulmanagementeinheiten BMU sind über einen Batterie- oder Modul-Bus BB an ein übergeordnetes Batteriemanagementsystem BMS der Antriebsbatterie BP angeschlossen. Eine solches System wird in der Fachsprache auch als BMS bezeichnet. Das Batteriemanagementsystem BMS ist dazu eingerichtet, aktuelle Antriebsbatteriedaten wie Batterietemperaturwerte, Batteriespannungswerte, Ladestromwerte und/oder eine Übertemperaturwarnung W jeweils zu einem Batteriemodul MOD und/oder zu einer Batteriezelle BAT zu erfassen. Zudem kann das Batteriemanagementsystem BMS elektrische Ein- und /Ausgänge I/O aufweisen, um z.B. Lüfter oder Pumpen P anzusteuern oder weitere elektrische Komponenten der Antriebsbatterie BP zu überwachen. Der Laderegler LM, das Batteriemanagementsystem BMS sowie nicht weiter gezeigte Komponenten der Antriebsbatterie BP sind über eine CAN-batterieseitige Busleitung CL miteinander verbunden. Die batterieseitige CAN-Busleitung CL ist zudem mit einer von aussen zugänglichen CAN-Fahrzeugbusschnittstelle CAN und einer CAN-Diagnoseschnittstelle CAN, OBD der Antriebsbatterie BP verbunden.

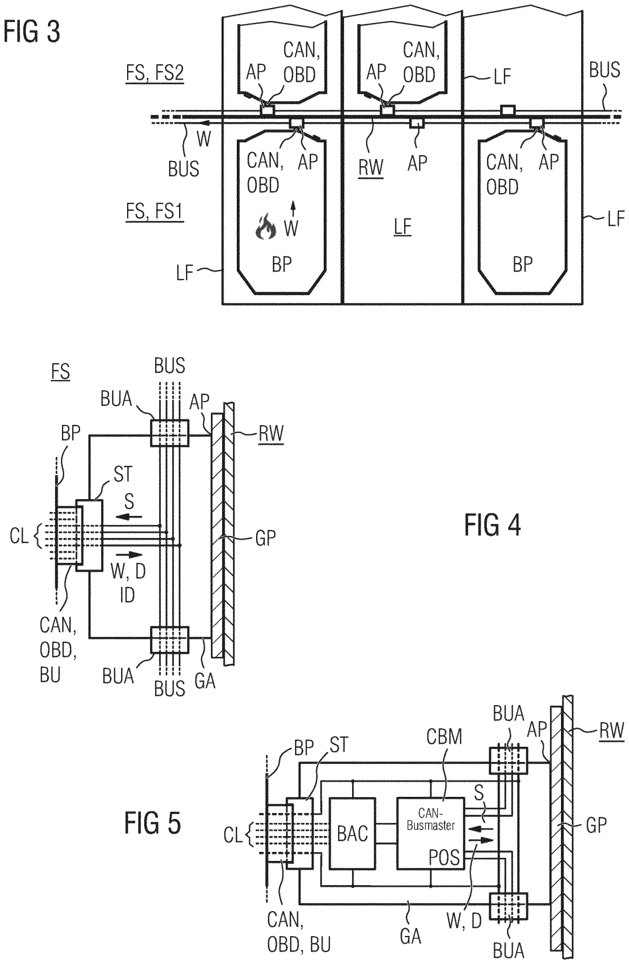

FIG 2 zeigt ein Beispiel einer erfindungsgemässen Anlage BMA zur thermischen Überwachung einer Vielzahl von in dem Regallagersystem RL eingelagerten Antriebsbatterien BP. Das gezeigte Regallagersystem RL weist beispielhaft drei Ebenen E, nummeriert von E1 bis E3 von unten nach oben auf. Weiter weist das beispielhafte Regallagersystem RL drei Felder F bzw. Säulen auf, nummeriert von F1 bis F3 auf. Mit NF ist ein nicht zur Belegung mit einer Antriebsbatterie BP vorgesehenes Lagerfach bezeichnet. Das betrachtete Regallagersystem RL weist zudem eine erste «vordere» Fachseite FS, FS1 zur möglichen Bestückung mit Antriebsbatterien BP sowie eine zweite «hintere» Fachseite FS; FS2 auf. Letztere ist in dieser Darstellung jedoch nicht sichtbar (siehe FIG 3). Die tragenden Strukturen des Regallagersystems RL wie Böden und Träger sind aus Gründen der Übersichtlichkeit selbst nicht im Detail dargestellt. In einem Lagerfach LF in der zweiten Ebene E2 und im ersten Feld F1 liegt symbolisiert durch einen Flammensymbol ein Brandereignis oder ein Übertemperaturereignis bei einer eingelagerten Antriebsbatterie BP vor.

Erfindungsgemäss umfasst die Anlage BMA zumindest einen Anschlusspunkt AP im Bereich der Lagerfächer LF zur insbesondere automatischen datentechnischen Verbindung mit einer von aussen zugänglichen Fahrzeugbus- oder Diagnoseschnittstelle CAN, OBD einer jeweils in einem Lagerfach LF eingelagerten Antriebsbatterie BP (siehe dazu auch FIG 3), um aktuelle Antriebsbatteriedaten D wie Batterietemperaturwerte zu einem Batteriemodul MOD und/oder zu einer Batteriezelle BAT sowie eine Übertemperaturwarnung W wie hier im Lagerfach LF mit dem Flammensymbol von dem Batteriemanagementsystem BMS der jeweils eingelagerten Antriebsbatterie BP zu empfangen. Weiter ist die Anlage BMA dazu eingerichtet, die von dem zumindest einen Anschlusspunkt AP empfangenen Antriebsbatteriedaten D sowie die empfangene Übertemperaturwarnung W zu der jeweiligen im Regallagersystem RL eingelagerten Antriebsbatterie BP an eine übergeordnete Gefahrenmeldestelle Z auszugeben.

Im vorliegenden Beispiel sind die gezeigten Anschlusspunkte AP an einer Rückwand RW des jeweiligen Lagefachs LF angebracht. Die gezeigte Gefahrenmeldestelle Z ist dabei über eine Kommunikationsleitung BUS, insbesondere über eine (zentralenseitige) CAN-Busleitung, mit den jeweiligen Anschlusspunkten AP in den Lagerfächern LF verbunden. Die Gefahrenmeldezentrale Z kann zudem, wie angedeutet, mit weiteren Kommunikationsleitungen BUS zur Erfassung von Antriebsbatteriedaten D sowie Warnmeldungen W von Antriebsbatterien BP verbunden sein, die in weiteren Regalen bzw. Regallagersystemen RL eingelagert sind.

Die gezeigte Gefahrenmeldestelle Z umfasst einen zentralenseitigen Busmaster ZBM, hier einen CAN-Busmaster, der stellvertretend für einen CAN-Busmaster der Fahrzeugsteuerung in einem Elektrofahrzeug nun über die zentralenseitige CAN-Busleitung BUS und weiter über die daran angeschlossenen Anschlusspunkte AP datentechnisch auf das Batteriemanagementsystem BMS einer angeschlossenen eingelagerten Antriebsbatterie BP zur Erfassung der jeweiligen Antriebsbatteriedaten D und/oder einer jeweiligen Warnmeldung W zugreifen kann.

Mit dem Bezugszeichen S sind Steuerdaten oder Adressierungsdaten bezeichnet, die von der Gefahrenmeldestelle Z zur Adressierung der angeschlossenen Batteriemanagementsysteme BMS oder zur Quittierungen von gesendeten Antriebsbatteriedaten D oder Warnmeldungen W auf die Kommunikationsleitung BUS ausgegeben werden. Die Gefahrenmeldestelle Z ist zudem dazu eingerichtet, eine empfangene Übertemperaturwarnung W als Gefahrenmeldung AL an eine übergeordnete Leitstelle oder Managementstation weiterzuleiten. In diesem Fall entspricht die jeweilige Übertemperaturwarnung W zugleich der Gefahrenmeldung AL. Weiter ist die Gefahrenmeldestelle Z bereits dazu eingerichtet, mithilfe einer datentechnisch erreichbaren oder dort hinterlegten Tabelle TAB die Lagerfachposition POS einer im Regallagersystem RL eingelagerten Antriebsbatterie BP zu bestimmen. Die Tabelle POS kann z.B. Lagerfachpositionen POS im Regallagersystem RL umfassen, denen Busadressen oder eindeutigen Gerätekennungen der Batteriemanagementsysteme BMS von aktuell eingelagerten Antriebsbatterien BP zugeordnet sind.

FIG 3 zeigt eine Aufsicht auf das beispielhafte, von beiden Fachseiten FS1, FS2 her mit Antriebsbatterien BP bestückbare Regallagersystem RL gemäss FIG 2 sowie die Anschlusspunkte AP der Anlage BMA zur thermischen Überwachung der Antriebsbatterien BP. Es ist erkennbar, dass in zumindest einem Teil der Lagerfächer LF ein Anschlusspunkt AP an einer Rückwand RW des jeweiligen Lagerfachs LF derart angeordnet ist, dass die CAN-Fahrzeugbus- oder CAN- Diagnoseschnittstelle CAN, OBD einer jeweils ordnungsgemäss eingelagerten Antriebsbatterie BP einen gegenüberliegenden Anschlusspunkt AP zur Erfassung der Antriebsbatteriedaten D und/oder einer Übertemperaturwarnung W kontaktiert. Die jeweiligen Anschlusspunkte AP sind dabei über eine Kommunikationsleitung BUS in Form einer CAN-Busleitung mit der übergeordneten Gefahrenmeldestelle Z verbunden. Weiter sind die Anschlusspunkte AP dazu eingerichtet, die von den jeweiligen Batteriemanagementsystemen BMS empfangenen Antriebsbatteriedaten D und/oder eine empfangene Übertemperaturwarnung W zur Ausgabe an die Gefahrenmeldestelle Z weiterzuleiten.

FIG 4 zeigt ein erstes Beispiel zum Anschliessen einer von aussen zugänglichen Fahrzeugbus- oder Diagnoseschnittstelle CAN, OBD einer Antriebsbatterie BP an einen regallagerseitigen Anschlusspunkt AP. Im rechten Teil der FIG 4 ist eine Rückwand RW eines Lagerfachs LF zu sehen, an welcher der Anschlusspunkt AP angebracht ist. Mit GP ist eine Grundplatte und mit GA ein Gehäuse des Anschlusspunktes AP bezeichnet. Im Gehäuse GA sind zwei CAN-Anschlussbuchsen BUA zum Anschliessen in eine zentralenseitige CAN-Busleitung BUS sowie ein CAN-Stecker ST zum Anschliessen an einer als Buchse ausgeführten CAN-Fahrzeugbus- oder DAN-Diagnoseschnittstelle CAN, OBD angeordnet. Die zugehörigen Verbindungsadern zu den beiden CAN-Anschlussbuchsen BUA und zu dem CAN-Stecker ST, wie eine CAN_HIGH-Leitung (CAN_H), eine CAN_LOW-Leitung (CAN_L) für eine symmetrische Signalübertragung sowie eine CAN_GND-Leitung (Masse) und eine Leitung zur 5V- oder 12V-Spannungsversorgung, sind untereinander parallel verschaltet. Mit CL ist die batterieinterne CAN-Busleitung zur datentechnischen Verbindung dem Batteriemanagementsystem BMS bezeichnet. Im Falle des Anschlusses des Anschlusspunktes AP an eine CAN-Diagnoseschnittstelle OBD basiert letztere auf einem Typ OBD-2 oder OBD-3. Sie kann weitere, im vorliegenden Fall nicht relevante Busschnittstellen, wie z.B. eine J1850-Busschnittstelle, umfassen. Im Falle des Anschlusses des Anschlusspunktes AP an eine CAN-Fahrzeugbusschnittstelle CAN umfasst letztere vorzugsweise eine fünfpolige M12-Anschlussbuchse.

Sind alle Anschlusspunkte AP eines Regallagersystems RL auf diese Weise an die zentralenseitige CAN-Busleitung BUS angeschaltet, so ist das Batteriemanagementsystem BMS einer jeweils eingelagerten Antriebsbatterie BP über die CAN-Fahrzeugbus- oder CAN-Diagnoseschnittstelle CAN, OBD mittels eines zentralenseitigen CAN-Busmasters ZBM der Gefahrenmeldestelle Z datentechnisch erreichbar. Mit ID ist eine eindeutige, vom Batteriemanagementsystem BMS einer Antriebsbatterie BP an den zentralenseitigen Busmaster ZBM übertragene Busadresse oder Seriennummer bezeichnet, auf deren Basis die Lagerfachposition POS der Antriebsbatterie BP durch den zentralenseitigen Busmaster ZBM ermittelbar ist.

FIG 5 zeigt ein zweites Beispiel zum Anschliessen einer von aussen zugänglichen CAN-Fahrzeugbus- oder CAN-Diagnoseschnittstelle CAN, OBD einer Antriebsbatterie BP an einen regallagerseitigen Anschlusspunkt AP. Im Vergleich zum vorherigen Beispiel ist für jeden Anschlusspunkt AP ein separater anschlusspunktseitiger CAN-Busmaster CBM zwischen den beiden CAN-Anschlussbuchsen BUA und dem CAN-Stecker ST vorgesehen. Mit BAC ist eine CAN-Busanschaltung zum Anschalten an die CAN-Busleitung bezeichnet, sofern diese nicht bereits im anschlusspunktseitigen CAN-Busmaster CBM integriert ist. Letzterer wird elektrisch über die CAN-Diagnoseschnittstelle OBD der Antriebsbatterie BP mit Strom versorgt.

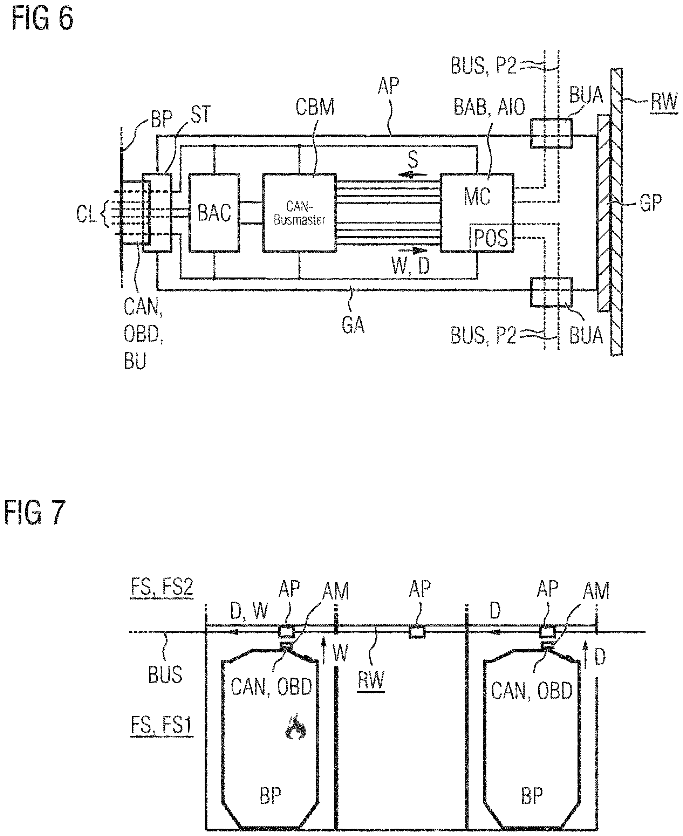

FIG 6 zeigt ein drittes Beispiel zum Anschliessen einer von aussen zugänglichen CAN-Fahrzeugbus- oder CAN-Diagnoseschnittstelle CAN, OBD einer Antriebsbatterie BP an einen regallagerseitigen Anschlusspunkt AP. In diesem Fall ist die zentralenseitige Kommunikationsleitung BUS eine Zweidraht-Melderlinie P2 bzw. ein Zweidraht-Melderbus eines Brandmeldesystems und die Gefahrenmeldezentrale Z eine Brandmeldezentrale. Weiter ist im Vergleich zum vorherigen Beispiel noch eine Busanschaltung zwischen dem anschlusspunktseitigen CAN-Busmaster CBM und den beiden Anschlussbuchsen BUA zum Anschliessen an die Zweidraht-Melderlinie P2 zwischengeschaltet. Im vorliegenden Beispiel umfasst die Busanschaltung BAB einen Mikrocontroller MC. Letzterer ist zum Datenaustausch zwischen dem anschlusspunktseitigen CAN-Busmaster CBM und der Brandmeldezentrale Z eingerichtet. Im Mikrocontroller MC kann zudem eine Lagerfachkennung POS gespeichert sein, die zum Anschlusspunkt AP gehört. Diese wird gleichfalls von der Busanschaltung BAB an den zentralenseitigen Buscontroller ZBM übertragen.

Die Busanschaltung BAB kann alternativ oder zusätzlich einen Ein-/Ausgabebaustein AIO für eine automatisch adressierte Brandmelderlinie umfassen, wie z.B. einen FDCIO222- oder FDCIO224-Ein-/Ausgabebaustein von Siemens zum Anschliessen an eine FDnet- oder C-NET-Brandmelderlinie von Siemens. Dabei können die zu übertragenden Antriebsbatteriedaten D, insbesondere eine Übertemperaturwarnung W, an einem digitalen Ausgang des anschlusspunktseitigen CAN-Busmasters CBM einem digitalen Eingang des Ein-/Ausgabebausteins AIO bereitgestellt werden. Auf umgekehrtem Wege können zu übertragenden Steuerdaten S an einem digitalen Ausgang des Ein-/Ausgabebausteins AIO einem digitalen Eingang des anschlusspunktseitigen CAN-Busmaster CBM bereitgestellt werden. Sind alle Ein-/Ausgabebausteine AIO der Anschlusspunkte AP in den Lagerfächern LF gemeinsam an die Melderlinie P2 angeschlossen, so sind diese datentechnisch durch die Brandmeldezentrale Z eindeutig erreichbar, da jedem Ein-/Ausgabebaustein AIO durch die Brandmeldezentrale Z eine eindeutige Busadresse zugewiesen wird. Dadurch ist der Brandmeldezentrale Z auch die Position POS der Lagerfächer LF mit den Anschlusspunkten AP bekannt.

Der anschlusspunktseitige Busmaster CMB und die Busanschaltung BUA werden elektrisch über die CAN-Diagnoseschnittstelle OBD der Antriebsbatterie BP mit Strom versorgt.

FIG 7 zeigt eine Aufsicht auf ein beispielhaftes Regallagersystem RL mit drahtlos arbeitenden Anschlusspunkten AP zum Anschluss einer jeweils eingelagerten Antriebsbatterie AP gemäss der Erfindung. In diesem Fall ist auf der CAN-Fahrzeugbus- oder CAN-Diagnoseschnittstelle CAN, OBD ein Aufsteckmodul AM appliziert, das die Antriebsbatteriedaten D sowie eine Übertemperaturwarnung W drahtlos an einen entsprechend zum Empfang eingerichteten Anschlusspunkt AP überträgt, und welches gegebenenfalls auf umgekehrtem Wege Steuerdaten S, wie z.B. Adressierungsdaten, vom Anschlusspunkt AP empfängt.

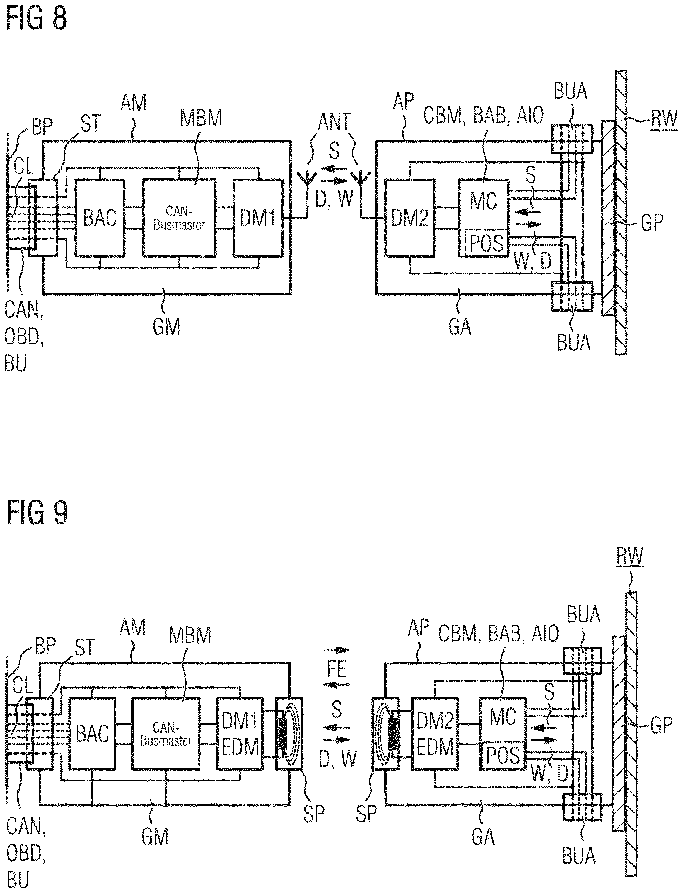

FIG 8 zeigt ein Beispiel für einen regallagerseitigen, drahtlos arbeitenden Anschlusspunkt AP in Funkverbindung mit einem auf einer CAN-Fahrzeugbus- oder CAN-Diagnoseschnittstelle CAN, OBD aufgesteckten Aufsteckmodul AM gemäss der Erfindung.

Gemäss der Erfindung befindet sich das jeweilige applizierte Aufsteckmodul AM in räumlicher Nähe zum gezeigten Anschlusspunkt AP. Das Aufsteckmodul AM umfasst einen auf die Buchse BU der CAN- Fahrzeugbus- oder CAN-Diagnoseschnittstelle CAN, OBD abgestimmten Stecker ST zur möglichen elektrischen Kontaktierung. Weiter weist das Aufsteckmodul AM neben einem Gehäuse GM einen modulseitigen CAN-Busmaster MBM und eine datentechnisch damit verbundene erste funkgestützte Datenübertragungseinheit DM1 auf. Der modulseitige CAN-Busmaster MBM ist dazu eingerichtet, die Antriebsbatteriedaten D und/oder eine Übertemperaturwarnung W vorzugsweise fortlaufend von der Schnittstelle zur batterieseitigen CAN-Busleitung CL der kontaktierten CAN-Fahrzeugbusschnittstelle CAN oder CAN-Diagnoseschnittstelle OBD zu empfangen oder anzufordern. Weiter ist der modulseitige CAN-Busmaster MBM dazu eingerichtet, die empfangenen Antriebsbatteriedaten D und/oder eine empfangene Übertemperaturwarnung W zur Ausgabe über Funk an die erste funkgestützte Datenübertragungseinheit DM1 weiterzuleiten.

Der im rechten Teil der FIG 8 gezeigte Anschlusspunkt AP weist eine zweite funkgestützte Datenübertragungseinheit DM2 und eine datentechnisch damit verbundene Melderbus-Anschaltung BAB auf. Letztere ist dazu eingerichtet, die von der ersten funkgestützten Datenübertragungseinheit DM1 an die zweite funkgestützte Datenübertragungseinheit DM2 übertragenen Antriebsbatteriedaten D und/oder eine übertragene Übertemperaturwarnung W zu empfangen. Mit ANT ist jeweils eine Antenne dieser beiden funkgestützten Datenübertragungseinheiten DM1, DM2 bezeichnet. Die Melderbus-Anschaltung BAB ist zudem dazu eingerichtet, die empfangenen Antriebsbatteriedaten D und/oder eine empfangene Übertemperaturwarnung W über die Melderlinie P2 an die Brandmeldezentrale Z als Gefahrenmeldestelle zu übertragen. In entsprechender Weise können Steuerdaten S, wie z.B. Adressierungsdaten, von der Brandmeldezentrale Z über den Anschlusspunkt AP und weiter drahtlos über das Aufsteckmodul AM zur batterieseitigen CAN-Busleitung CL der kontaktierten CAN-Fahrzeugbusschnittstelle CAN bzw. CAN-Diagnoseschnittstelle OBD letztendlich zum Batteriemanagementsystem BMS der eingelagerten Antriebsbatterie BP weitergeleitet werden.

Die beiden funkgestützten Datenübertragungseinheiten DM1, DM2 basieren z.B. auf einem Bluetooth-, Thread- oder WLAN-Standard.

FIG 9 zeigt ein weiteres Beispiel für einen drahtlos arbeitenden Anschlusspunkt AP in induktiv gekoppelter Funkverbindung mit einem auf einer CAN-Fahrzeugbus- oder CAN-Diagnoseschnittstelle CAN, OBD aufgesteckten Aufsteckmodul AM gemäss der Erfindung.

Im Vergleich zum vorherigen Beispiel sind die erste und zweite funkgestützte Datenübertragungseinheit DM1, DM2 zugleich funkgestützte Energie-/Datenübertragungseinheiten EDM. Beide Energie-/Datenübertragungseinheiten EDM sind zudem dazu eingerichtet, elektrische Energie von der Kommunikationsleitung BUS über den Anschlusspunkt AP und dann weiter auf induktiv gekoppeltem Wege in Form von magnetischer Feldenergie FE an das Aufsteckmodul AM zur elektrischen Versorgung des Aufsteckmoduls AM und/oder über die CAN-Fahrzeugbus- oder CAN-Diagnoseschnittstelle CAN, OBD zur elektrischen Versorgung des Batteriemanagementsystems BMS der eingelagerten Antriebsbatterie BP zu übertragen. Alternativ oder zusätzlich können beide funkgestützten Energie-/Datenübertragungseinheiten EDM dazu eingerichtet sein, elektrische Energie von der eingelagerten Antriebsbatterie BP über die CAN-Fahrzeugbus- oder CAN-Diagnoseschnittstelle CAN, OBD zum applizierten Aufsteckmodul AM und weiter auf induktiv gekoppeltem Wege in Form von magnetischer Feldenergie FE zumindest zur elektrischen Versorgung des Anschlusspunktes AP zu übertragen.

Beide Energie-/Datenübertragungseinheiten EDM umfassen eine elektrische Spule SP zum Senden und/oder zum Empfangen der magnetischen Feldenergie FE. Die induktive Daten- und Energieübertragung kann z.B. auf einem ISO/IEC 15693-Standard oder auf einem ISO/IEC 14443-Standard basieren.

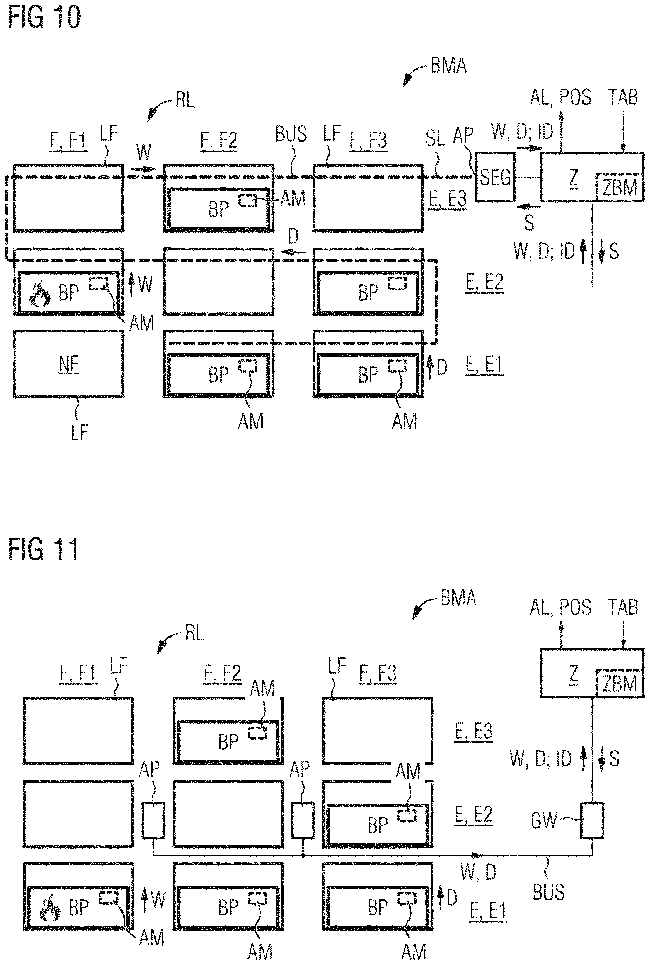

FIG 10 zeigt ein Beispiel einer erfindungsgemässen Anlage BMA zur thermischen Überwachung von eingelagerten und mit Aufsteckmodulen AM versehenen Antriebsbatterien BP und mit einem im Regallagersystem RL verlegten elektrischen Leckwellenleiter SL.

Dabei umfasst die Kommunikationsleitung BUS einen solchen elektrischen Leckwellenleiter SL, insbesondere ein Schlitzkabel, ausgebildet zum Empfangen und Senden von Funkwellen. Der elektrische Leckwellenleiter SL verläuft vorzugsweise in den für die Einlagerung der Antriebsbatterien BP vorgesehenen Lagerfächern LF entlang. Die Gefahrenmeldestelle Z ist im vorliegenden Beispiel mit einer Sende-/Empfangseinheit SEG zum Anschliessen des elektrischen Leckwellenleiters SL verbunden. Der elektrische Leckwellenleiter SL bildet somit zusammen mit der Sende-/Empfangseinheit SEG einen gemeinsamen Anschlusspunkt AP, um die von den eingelagerten Antriebsbatterien BP stammenden Antriebsbatteriedaten D und/oder eine von den Antriebsbatterien BP stammende Übertemperaturwarnung W zu empfangen. Dabei ist auf der CAN-Fahrzeugbus- oder Diagnoseschnittstelle CAN, OBD einer jeweils eingelagerten Antriebsbatterie BP wiederum ein Aufsteckmodul AM appliziert ist. Die Aufsteckmodule AM weisen jeweils einen modulseitigen CAN-Busmaster MBM und eine datentechnisch damit verbundene erste funkgestützte Datenübertragungseinheit DM1 auf. Der modulseitige CAN-Busmaster MBM ist dazu eingerichtet, die Antriebsbatteriedaten D und/oder eine Übertemperaturwarnung W vorzugsweise fortlaufend von einer Schnittstelle zu einer batterieseitigen CAN-Busleitung CL der jeweiligen kontaktierten CAN-Fahrzeugbus- oder CAN-Diagnoseschnittstelle CAN, OBD zu empfangen oder anzufordern. Weiter ist der modulseitige CAN-Busmaster MBM dazu eingerichtet, die empfangenen Antriebsbatteriedaten D sowie eine empfangene Übertemperaturwarnung W zur Ausgabe über Funk an die erste funkgestützte Datenübertragungseinheit DM1 weiterzuleiten. Die in Form von Funkwellen ausgesandten Antriebsbatteriedaten D sowie die ausgesandte Übertemperaturwarnung W werden dann vom elektrischen Leckwellenleiter SL empfangen und von diesem an die Sende-/Empfangseinheit SEG weitergeleitet. Letztere überträgt dann diese an die damit verbundene übergeordnete Gefahrenmeldestelle Z.

FIG 11 zeigt schliesslich ein weiteres Beispiel einer erfindungsgemässen Anlage BMA zur thermischen Überwachung von eingelagerten Antriebsbatterien BP mit im Bereich des Regallagersystems RL verteilt angeordneten funkgestützten Anschlusspunkten AP.

In diesem Beispiel sind die verteilt angeordneten funkgestützten Anschlusspunkten AP über eine drahtgebundene Kommunikationsleitung BUS direkt mit einem Gateway GW verbunden. Die Gefahrenmeldezentrale Z ist gleichfalls datentechnisch mit dem Gateway GW verbunden. Die funkgestützten Anschlusspunkte AP sind dazu eingerichtet, die von den jeweiligen eingelagerten Antriebsbatterien BP stammenden Antriebsbatteriedaten D und/oder eine von den jeweiligen Antriebsbatterien BP stammende Übertemperaturwarnung W zu empfangen und an das Gateway GW zu übertragen. Das Gateway GW ist seinerseits dazu eingerichtet, die empfangenen Antriebsbatteriedaten D und/oder eine empfangene Übertemperaturwarnung W dann an die übergeordnete Gefahrenmeldestelle Z weiterzuleiten.

Zusammenfassend betriff die Erfindung eine Anlage BMA zur thermischen Überwachung einer Vielzahl von Antriebsbatterien BP, wobei die Antriebsbatterien BP in einem Regallagersystem RL mit einer Vielzahl von Lagerfächern LF eingelagert sind und jeweils eine Mehrzahl von Batteriemodulen MOD mit Batteriezellen BAT, ein Batteriemanagementsystem BMS sowie eine Anschlussmöglichkeit an eine Fahrzeugsteuerung des Elektrofahrzeugs umfassen. Die Anlage BMA umfasst zumindest einen Anschlusspunkt AP im Bereich des Regallagersystems RL zur insbesondere automatischen datentechnischen Verbindung mit einer jeweils von aussen zugänglichen Fahrzeugbus- oder Diagnoseschnittstelle CAN, OBD einer eingelagerten Antriebsbatterie BP, um von dem Batteriemanagementsystem BMS der jeweils eingelagerten Antriebsbatterie BP aktuelle Antriebsbatteriedaten D wie Batterietemperaturwerte und/oder eine Übertemperaturwarnung W jeweils zu einem Batteriemodul MOD und/oder zu einer Batteriezelle BAT zu empfangen. Die Anlage BMA ist dazu eingerichtet, die von dem zumindest einen Anschlusspunkt AP empfangenen Antriebsbatteriedaten D und/oder empfangene Übertemperaturwarnung W zu der jeweiligen im Regallagersystem RL eingelagerten Antriebsbatterie BP vorzugsweise mit einer zugeordneten Lagefachposition POS an eine übergeordnete Gefahrenmeldestelle Z auszugeben.

### Bezugszeichenliste

- AC/DC: Batterieladeanschluss
- AIO: Adressierbare Ein-/Ausgabe, FDCIO
- AL: Gefahrenmeldung
- AM: Aufsteckmodul
- ANT: Antenne
- AP: Anschlusspunkt
- BAB: Busanschaltung für die Melderlinie
- BAC: Busanschaltung an die CAN-Busleitung
- BAT: Batteriezelle
- BB: Batteriebus, Modulbus
- BMA: Überwachungsanlage, Brandmeldeanlage
- BMS: Batteriemanagementsystem
- BMU: Batteriemodulmanagementeinheit
- BP: Antriebsbatterie, Lithium-Ionen-Akkumulator, Battery Pack
- BU: Buchse, Schnittstelle
- BUA: Busanschlussbuchse
- BUS: Kommunikationsleitung, zentralenseitige Busleitung, CAN-Busleitung
- CAN: Fahrzeugbusschnittstelle, CAN-Fahrzeugbusschnittstelle
- CBM: anschlusspunktseitiger (CAN-)Busmaster
- CL: batterieseitige CAN-Busleitung
- D: Antriebsbatteriedaten, Diagnosedaten
- E, E1-E3: Ebene, Regalebene
- DM1, DM2: funkgestützte Datenübertragungseinheit
- EDM: Energie-/Daten-Übertragungseinheit
- F, F1-F3: Feld, Regalfeld, Säule, Reihe
- FE: magnetische Feldenergie, Energie
- FS, FS1,: Fachseite
- FS2 G: Antriebsbatteriegehäuse
- GA: Gehäuse des Anschlusspunktes
- GM: Gehäuse des Aufsteckmoduls
- GP: Grundplatte
- GW: Gateway, Router, Bridge, Repeater
- ID: eindeutige Kennung, Busadresse, Seriennummer
- I/O: elektrische Ein- und Ausgänge
- LF: Lagerplatz, Lagerfach
- LM: Laderegler, Leistungsmodul, Ladeelektronik
- MBM: modulseitiger (CAN-)Busmaster
- MC: Steuereinheit, Mikrocontroller
- MOD: Batteriemodul
- NF: Nichtbelegbares Lagerfach
- OBD: Diagnoseschnittstelle, OBD-Schnittstelle
- P: Pumpe, Lüfter
- P2: P2-Kommunikationsleitung
- POS: Brandort, Lagerplatzposition
- RL: Regallagersystem, Hochregal
- RW: Rückwand
- S: Steuerdaten
- SCH: Verbindungskabel, Stromschiene
- SEG: Sende-/Empfangsgerät für Schlitzleiter
- SL: Schlitzleiter
- SP: Übertragungsspule, magnetische Antenne
- ST: Stecker, Schnittstelle
- STR1-STR3: Batterie-String, Batteriestrang
- Z: Gefahrenmeldestelle, Brandmeldezentrale
- ZBM: zentralenseitiger (CAN-)Busmaster

## Patentansprüche

1. Anlage (BMA) zur thermischen Überwachung einer Vielzahl von Antriebsbatterien (BP), wobei die Antriebsbatterien (BP) in einem Regallagersystem (RL) mit einer Vielzahl von Lagerfächern (LF) eingelagert sind, wobei die Antriebsbatterien (BP) zur Anbringung in Elektrofahrzeugen vorgesehen sind und jeweils eine Mehrzahl von Batteriemodulen (MOD) mit einer Mehrzahl von Batteriezellen (BAT), ein Batteriemanagementsystem (BMS) sowie eine Anschlussmöglichkeit an eine Fahrzeugsteuerung des Elektrofahrzeugs umfassen,
- wobei die Anlage (BMA) zumindest einen Anschlusspunkt (AP) im Bereich der Lagerfächer (LF) zur insbesondere automatischen datentechnischen Verbindung mit einer von aussen zugänglichen Fahrzeugbus- oder Diagnoseschnittstelle (CAN, OBD) einer jeweils in einem Lagerfach (LF) eingelagerten Antriebsbatterie (BP) umfasst, um aktuelle Antriebsbatteriedaten (D), insbesondere Batterietemperaturwerte, und/oder eine Übertemperaturwarnung (W) von dem Batteriemanagementsystem (BMS) der jeweils eingelagerten Antriebsbatterie (BP) zu empfangen, und
- wobei die Anlage (BMA) dazu eingerichtet ist, die von dem zumindest einen Anschlusspunkt (AP) empfangenen Antriebsbatteriedaten (D) und/oder eine empfangene Übertemperaturwarnung (W) zu der jeweiligen im Regallagersystem (RL) eingelagerten Antriebsbatterie (BP) an eine übergeordnete Gefahrenmeldestelle (Z) auszugeben.

2. Anlage (BMA) nach Anspruch 1,
- wobei in zumindest einem Teil der Lagerfächer (LF) ein Anschlusspunkt (AP) angeordnet ist, wobei der jeweilige Anschlusspunkt (AP) derart im oder am jeweiligen Lagerfach (LF) angeordnet ist, insbesondere an einer Rückwand (RW) des jeweiligen Lagerfachs (LF), dass die Fahrzeugbus- oder Diagnoseschnittstelle (CAN, OBD) einer jeweils ordnungsgemäss eingelagerten Antriebsbatterie (BP) einen gegenüberliegenden Anschlusspunkt (AP) zur Erfassung der Antriebsbatteriedaten (D) und/oder einer Übertemperaturwarnung (W) kontaktiert, und
- wobei der jeweilige Anschlusspunkt (AP) über eine Kommunikationsleitung (BUS) mit der übergeordneten Gefahrenmeldestelle (Z) verbunden ist und dazu eingerichtet ist, die empfangenen Antriebsbatteriedaten (D) und/oder eine empfangene Übertemperaturwarnung (W) zur Ausgabe an die Gefahrenmeldestelle (Z) weiterzuleiten.

3. Anlage (BMA) nach Anspruch 2, wobei die Kommunikationsleitung (BUS) eine zentralenseitige Busleitung ist, wobei die jeweilige Fahrzeugbus- oder Diagnoseschnittstelle (CAN, OBD) als Buchse (BU) oder als Stecker ausgebildet ist und zumindest eine Schnittstelle zu einer batterieseitigen Busleitung (CL) zur Bereitstellung der Antriebsbatteriedaten (D) und/oder einer Übertemperaturwarnung (W) umfasst, wobei der jeweilige Anschlusspunkt (AP) einen auf die Buchse (BU) bzw. auf den Stecker der jeweiligen Fahrzeugbus- oder Diagnoseschnittstelle (CAN, OBD) abgestimmten Stecker (ST) bzw. Buchse zur möglichen elektrischen Kontaktierung umfasst, und wobei der jeweilige Anschlusspunkt (AP) im kontaktierten Zustand zur elektrischen Verbindung der batterieseitigen Busleitung (CL) mit der zentralenseitigen Busleitung (BUS) eingerichtet ist.

4. Anlage (BMA) nach Anspruch 2, wobei die Kommunikationsleitung (BUS) eine zentralenseitige Busleitung ist, wobei die jeweilige Fahrzeugbus- oder Diagnoseschnittstelle (CAN, OBD) als Buchse (BU) oder als Stecker ausgebildet ist und zumindest eine Schnittstelle zu einer batterieseitigen Busleitung (CL) zur Bereitstellung der Antriebsbatteriedaten (D) und/oder einer Übertemperaturwarnung (W) umfasst, wobei der jeweilige Anschlusspunkt (AP) einen auf die Buchse (BU) bzw. auf den Stecker der jeweiligen Fahrzeugbus- oder Diagnoseschnittstelle (CAN, OBD) abgestimmten Stecker (ST) bzw. Buchse zur möglichen elektrischen Kontaktierung umfasst, wobei der jeweilige Anschlusspunkt (AP) einen zwischen dem Stecker (ST) bzw. eine zwischen der Buchse und der zentralenseitigen Busleitung (BUS) geschalteten anschlusspunktseitigen Busmaster (CBM) aufweist, wobei der anschlusspunktseitige Busmaster (CBM) dazu eingerichtet ist, die Antriebsbatteriedaten (D) und/oder eine Übertemperaturwarnung (W) vorzugsweise fortlaufend von der Schnittstelle zur batterieseitigen Busleitung (CL) der jeweiligen kontaktierten Fahrzeugbus- oder Diagnoseschnittstelle (CAN, OBD) zu empfangen oder anzufordern, und wobei der anschlusspunktseitige Busmaster (CBM) dazu eingerichtet ist, die empfangenen Antriebsbatteriedaten (D) und/oder eine empfangene Übertemperaturwarnung (W) über die zentralenseitige Busleitung (BUS) an einen zentralenseitigen Busmaster (ZBM) der übergeordneten Gefahrenmeldestelle (Z) weiterzuleiten.

5. Anlage (BMA) nach Anspruch 2,
- wobei die Anlage (BMA) eine Brandmeldeanlage ist, wobei die Gefahrenmeldestelle (Z) eine Brandmeldezentrale ist, wobei die Kommunikationsleitung (BUS) eine Melderlinie (P2) ist, insbesondere eine Zweidraht-Melderlinie, und wobei die in den Lagerfächern (LF) angeordneten Anschlusspunkte (AP) sowie die Brandmeldezentrale (Z) gemeinsam an der Melderlinie (P2) angeschaltet sind,
- wobei die jeweilige Fahrzeugbus- oder Diagnoseschnittstelle (CAN, OBD) als Buchse (BU) bzw. als Stecker ausgebildet ist, und zumindest eine Schnittstelle zu einer batterieseitigen Busleitung (CL) zur Bereitstellung der Antriebsbatteriedaten (D) und/oder einer Übertemperaturwarnung (W) umfasst,
- wobei der jeweilige Anschlusspunkt (AP) einen auf die Buchse (BU) bzw. einen auf den Stecker der jeweiligen Fahrzeugbus- oder Diagnoseschnittstelle (CAN, OBD) abgestimmten Stecker (ST) bzw. eine darauf abgestimmte Buchse zur möglichen elektrischen Kontaktierung umfasst,
- wobei der jeweilige Anschlusspunkt (AP) einen zwischen dem Stecker (ST) bzw. einen zwischen der Buchse und der Melderlinie (P2) geschalteten anschlusspunktseitigen Busmaster (CBM) und eine damit datentechnisch verbundene Melderbus-Anschaltung (BAB) aufweist,
- wobei der jeweilige anschlusspunktseitige Busmaster (CBM) dazu eingerichtet ist, die Antriebsbatteriedaten (D) und/oder eine Übertemperaturwarnung (W) vorzugsweise fortlaufend von der Schnittstelle zur batterieseitigen Busleitung (CL) der jeweiligen kontaktierten Fahrzeugbus- oder Diagnoseschnittstelle (CAN, OBD) zu empfangen oder anzufordern, und weiter dazu eingerichtet ist, die empfangenen Antriebsbatteriedaten (D) und/oder eine empfangene Übertemperaturwarnung (W) an die Melderbus-Anschaltung (BAB) weiterzuleiten, und
- wobei die jeweilige Melderbus-Anschaltung (BAB) über die Melderlinie (P2) mit der übergeordneten Brandmeldezentrale (Z) verbunden ist und dazu eingerichtet ist, die empfangenen Antriebsbatteriedaten (D) und/oder eine empfangene Übertemperaturwarnung (W) an die übergeordnete Brandmeldezentrale (Z) weiterzuleiten.

6. Anlage (BMA) nach Anspruch 2,
- wobei die Kommunikationsleitung (BUS) eine zentralenseitige Busleitung ist, wobei die jeweilige Fahrzeugbus- oder Diagnoseschnittstelle (CAN, OBD) als Buchse (BU) oder als Stecker ausgebildet ist und zumindest eine Schnittstelle zu einer batterieseitigen Busleitung (CL) zur Bereitstellung der Antriebsbatteriedaten (D) und/oder einer Übertemperaturwarnung (W) umfasst,
- wobei auf der Fahrzeugbus- oder Diagnoseschnittstelle (CAN, OBD) einer jeweils eingelagerten Antriebsbatterie (BP) ein Aufsteckmodul (AM) appliziert ist, wobei sich das jeweilige applizierte Aufsteckmodul (AM) in räumlicher Nähe zu einem jeweiligen Anschlusspunkt (AP) befindet, wobei das jeweilige Aufsteckmodul (AM) einen auf die Buchse (BU) bzw. einen auf den Stecker der jeweiligen Fahrzeugbus- oder Diagnoseschnittstelle (CAN, OBD) abgestimmten Stecker (ST) bzw. eine darauf abgestimmte Buchse zur möglichen elektrischen Kontaktierung umfasst,
- wobei das jeweilige Aufsteckmodul (AM) einen modulseitigen Busmaster (MBM) und eine datentechnisch damit verbundene erste funkgestützte Datenübertragungseinheit (DM1) aufweist, wobei der modulseitige Busmaster (MBM) dazu eingerichtet ist, die Antriebsbatteriedaten (D) und/oder eine Übertemperaturwarnung (W) vorzugsweise fortlaufend von der Schnittstelle zur batterieseitigen Busleitung (CL) der jeweils kontaktierten Fahrzeugbusschnittstelle (CAN) oder Diagnoseschnittstelle (OBD) zu empfangen oder anzufordern, und weiter dazu eingerichtet ist, die empfangenen Antriebsbatteriedaten (D) und/oder eine empfangene Übertemperaturwarnung (W) zur Ausgabe über Funk an die erste funkgestützte Datenübertragungseinheit (DM1) weiterzuleiten,
- wobei der jeweilige Anschlusspunkt (AP) eine zweite funkgestützte Datenübertragungseinheit (DM2) und einen datentechnisch damit verbundenen anschlusspunktseitigen Busmaster (CBM) aufweist, wobei der anschlusspunktseitige Busmaster (CBM) dazu eingerichtet ist, die von der ersten funkgestützten Datenübertragungseinheit (DM1) an die zweite funkgestützte Datenübertragungseinheit (DM2) übertragenen Antriebsbatteriedaten (D) und/oder eine übertragene Übertemperaturwarnung (W) zu empfangen und weiter dazu eingerichtet ist, die empfangenen Antriebsbatteriedaten (D) und/oder eine empfangene Übertemperaturwarnung (W) über die zentralenseitige Busleitung (BUS) an die Gefahrenmeldestelle (Z) weiterzuleiten.

7. Anlage (BMA) nach Anspruch 2, wobei die Anlage eine Brandmeldeanlage (BMA) ist, wobei die Gefahrenmeldestelle (Z) eine Brandmeldezentrale ist, wobei die Kommunikationsleitung (BUS) eine Melderlinie (P2) ist, insbesondere eine Zweidraht-Melderlinie, an welcher die in den Lagerfächern (LF) angeordneten Anschlusspunkte (AP) und die Brandmeldezentrale (Z) angeschaltet sind, wobei die jeweilige Fahrzeugbus- oder Diagnoseschnittstelle (CAN, OBD) als Buchse (BU) bzw. als Stecker ausgebildet ist und zumindest eine Schnittstelle zu einer batterieseitigen Busleitung (CL), insbesondere zu einer batterieseitigen CAN-Busleitung, zur Bereitstellung der Antriebsbatteriedaten (D) und/oder einer Übertemperaturwarnung (W) umfasst,
- wobei auf der Fahrzeugbus- oder Diagnoseschnittstelle (CAN, OBD) einer jeweils eingelagerten Antriebsbatterie (BP) ein Aufsteckmodul (AM) appliziert ist, wobei sich das jeweilige applizierte Aufsteckmodul (AM) in räumlicher Nähe zu einem jeweiligen Anschlusspunkt (AP) befindet, wobei das jeweilige Aufsteckmodul (AM) einen auf die Buchse (BU) bzw. auf den Stecker der jeweiligen Fahrzeugbus- oder Diagnoseschnittstelle (CAN, OBD) abgestimmten Stecker (ST) bzw. eine darauf abgestimmte Buchse zur möglichen elektrischen Kontaktierung umfasst,
- wobei das jeweilige Aufsteckmodul (AM) einen modulseitigen Busmaster (MBM), insbesondere einen modulseitigen CAN-Busmaster, und eine datentechnisch damit verbundene erste funkgestützte Datenübertragungseinheit (DM1) aufweist, wobei der modulseitige Busmaster (MBM) dazu eingerichtet ist, die Antriebsbatteriedaten (D) und/oder eine Übertemperaturwarnung (W) vorzugsweise fortlaufend von der Schnittstelle zur batterieseitigen Busleitung (CL) der jeweils kontaktierten Fahrzeugbusschnittstelle (CAN) oder Diagnoseschnittstelle (OBD) zu empfangen oder anzufordern, und weiter dazu eingerichtet ist, die empfangenen Antriebsbatteriedaten (D) und/oder eine empfangene Übertemperaturwarnung (W) zur Ausgabe über Funk an die erste funkgestützte Datenübertragungseinheit (DM1) weiterzuleiten, und
- wobei der jeweilige Anschlusspunkt (AP) eine zweite funkgestützte Datenübertragungseinheit (DM2) und eine datentechnisch damit verbundene Melderbus-Anschaltung (BAB) aufweist, wobei die Melderbus-Anschaltung (BAB) dazu eingerichtet ist, die von der ersten funkgestützten Datenübertragungseinheit (DM1) an die zweite funkgestützte Datenübertragungseinheit (DM2) übertragenen Antriebsbatteriedaten (D) und/oder eine übertragene Übertemperaturwarnung (W) zu empfangen und zudem dazu eingerichtet ist, die empfangenen Antriebsbatteriedaten (D) und/oder eine empfangene Übertemperaturwarnung (W) über die Melderlinie (P2) an die Brandmeldezentrale (Z) zu übertragen.

8. Anlage (BMA) nach Anspruch 6 oder 7, wobei die erste und zweite funkgestützte Datenübertragungseinheit (DM1, DM2) funkgestützte Energie-/Datenübertragungseinheiten (EDM) sind, welche zudem dazu eingerichtet sind,
- elektrische Energie von der Kommunikationsleitung (BUS) über den jeweiligen Anschlusspunkt (AP) und dann weiter auf induktiv gekoppeltem Wege an das jeweilige Aufsteckmodul (AM) zur elektrischen Versorgung des jeweiligen Aufsteckmoduls (AM) und/oder des daran angeschlossenen Batteriemanagementsystems (BMS) der eingelagerten Antriebsbatterie (BP) zu übertragen, und/oder
- elektrische Energie von der jeweiligen Antriebsbatterie (BP) über die Fahrzeugbus- oder Diagnoseschnittstelle (CAN, OBD) zum jeweiligen applizierten Aufsteckmodul (AM) und weiter auf induktiv gekoppeltem Wege zumindest zur elektrischen Versorgung des jeweiligen Anschlusspunktes (AP) zu übertragen.

9. Anlage (BMA) nach Anspruch 1,
- wobei die Kommunikationsleitung (BUS) einen elektrischen Leckwellenleiter (SL), insbesondere ein Schlitzkabel, zum Empfangen und Senden von Funkwellen umfasst, wobei der elektrische Leckwellenleiter (SL) in oder an den für die Einlagerung der Antriebsbatterien (BP) vorgesehenen Lagerfächern (LF) entlang verläuft, wobei die Gefahrenmeldestelle (Z) eine Sende-/Empfangseinheit (SEG) zum Anschliessen des elektrischen Leckwellenleiters (SL) umfasst oder mit einer solchen datentechnisch verbunden ist, und wobei der elektrische Leckwellenleiter (SL) zusammen mit der Sende-/Empfangseinheit (SEG) einen gemeinsamen Anschlusspunkt (AP) bildet, um die von den jeweiligen eingelagerten Antriebsbatterien (BP) stammenden Antriebsbatteriedaten (D) und/oder eine von den jeweiligen Antriebsbatterien (BP) stammende Übertemperaturwarnung (W) zu empfangen,
- wobei auf der Fahrzeugbus- oder Diagnoseschnittstelle (CAN, OBD) einer jeweils eingelagerten Antriebsbatterie (BP) ein Aufsteckmodul (AM) appliziert ist, wobei das jeweilige Aufsteckmodul (AM) einen auf die Buchse (BU) bzw. auf den Stecker der jeweiligen Fahrzeugbus- oder Diagnoseschnittstelle (CAN, OBD) abgestimmten Stecker (ST) bzw. eine darauf abgestimmte Buchse zur möglichen elektrischen Kontaktierung umfasst, und
- wobei das jeweilige Aufsteckmodul (AM) einen modulseitigen Busmaster (MBM), insbesondere einen modulseitigen CAN-Busmaster, und eine datentechnisch damit verbundene erste funkgestützte Datenübertragungseinheit (DM1) aufweist, wobei der modulseitige Busmaster (MBM) dazu eingerichtet ist, die Antriebsbatteriedaten (D) und/oder eine Übertemperaturwarnung (W) vorzugsweise fortlaufend von einer Schnittstelle zu einer batterieseitigen Busleitung (CL), insbesondere zu einer batterieseitigen CAN-Busleitung, der jeweiligen kontaktierten Fahrzeugbus- oder Diagnoseschnittstelle (CAN, OBD) zu empfangen oder anzufordern, und weiter dazu eingerichtet ist, diese (D, W) zur Ausgabe über Funk an die erste funkgestützte Datenübertragungseinheit (DM1) weiterzuleiten.

10. Anlage (BMA) nach Anspruch 9, wobei die Gefahrenmeldestelle (Z) dazu eingerichtet ist, die einem jeweiligen Lagerfach (LF) zuzuordnende Lagerfachposition (POS) mittels einer Laufzeitmessung eines Testsignals von der Sende-/Empfangseinheit (SEG) entlang des elektrischen Leckwellenleiters (SL) zu einem adressierten Anschlusspunkt (AP) und auf umgekehrtem Wege zurück zu ermitteln.

11. Anlage (BMA) nach Anspruch 1,
- wobei die Anlage (BMA) eine Mehrzahl von im Bereich des Regallagersystems (RL) verteilt angeordneten funkgestützten Anschlusspunkten (AP) aufweist, die über eine drahtgebundene Kommunikationsleitung (BUS) direkt oder als funkgestütztes Maschennetzwerk mittelbar mit einem Gateway (GW) verbunden sind, wobei die Gefahrenmeldestelle (Z) datentechnisch mit dem Gateway (GW) verbunden ist oder eine solche aufweist, wobei die funkgestützten Anschlusspunkte (AP) dazu eingerichtet sind, die von den jeweiligen eingelagerten Antriebsbatterien (BP) stammenden Antriebsbatteriedaten (D) und/oder eine von den jeweiligen Antriebsbatterien (BP) stammende Übertemperaturwarnung (W) zu empfangen und an das Gateway (GW) zu übertragen, und wobei das Gateway (GW) dazu eingerichtet ist, die empfangenen Antriebsbatteriedaten (D) und/oder eine empfangene Übertemperaturwarnung (W) dann an die übergeordnete Gefahrenmeldestelle (Z) weiterzuleiten,
- wobei auf der Fahrzeugbus- oder Diagnoseschnittstelle (CAN, OBD) einer jeweils eingelagerten Antriebsbatterie (BP) ein Aufsteckmodul (AM) appliziert ist, wobei das jeweilige Aufsteckmodul (AM) einen auf die Buchse (BU) bzw. auf den Stecker der jeweiligen Fahrzeugbus- oder Diagnoseschnittstelle (CAN, OBD) abgestimmten Stecker (ST) bzw. eine darauf abgestimmte Buchse zur möglichen elektrischen Kontaktierung umfasst, und
- wobei das jeweilige Aufsteckmodul (AM) einen modulseitigen Busmaster (MBM), insbesondere einen modulseitigen CAN-Busmaster, und eine datentechnisch damit verbundene erste funkgestützte Datenübertragungseinheit (DM1) aufweist, wobei der jeweilige modulseitige Busmaster (MBM) dazu eingerichtet ist, die Antriebsbatteriedaten (D) und/oder ein Übertemperaturwarnung (W) vorzugsweise fortlaufend von einer Schnittstelle zu einer batterieseitigen Busleitung (CL), insbesondere zu einer batterieseitigen CAN-Busleitung, der jeweiligen kontaktierten Fahrzeugbus- oder Diagnoseschnittstelle (CAN, OBD) zu empfangen oder anzufordern, und weiter dazu eingerichtet ist, diese (D, W) zur Ausgabe über Funk an die erste funkgestützte Datenübertragungseinheit (DM1) weiterzuleiten.

12. Anlage (BMA) nach einem der Ansprüche 1 bis 8, wobei die einem jeweiligen Lagerfach (LF) zugeordnete Lagerfachposition (POS) im jeweiligen Anschlusspunkt (AP) gespeichert ist.

13. Anlage (BMA) nach einem der Ansprüche 6 bis 12, wobei die einem jeweiligen Lagerfach (LF) zugeordnete Lagerfachposition (POS) für die zwischenzulagernde Antriebsbatterie (BP) im jeweiligen applizierten Aufsteckmodul (AM) gespeichert ist.

14. Verwendung einer von aussen zugänglichen Fahrzeugbus- oder Diagnoseschnittstelle (CAN, OBD) einer Antriebsbatterie (BP) für Elektrofahrzeuge zur thermischen Überwachung der Antriebsbatterie (BP), wenn diese in einem Regallagersystem (RL) mit einer Vielzahl von Lagerfächern (LF) eingelagert wird, wobei zu deren thermischen Überwachung Antriebsbatteriedaten (D), insbesondere von Batterietemperaturwerten, und/oder eine Übertemperaturwarnung (W) von einem Batteriemanagementsystem (BMS) der Antriebsbatterie (BP) einem dazu eingerichteten batterieexternen Busmaster (CBM), insbesondere einem batterieexternen CAN-Busmaster, bereitgestellt werden, wobei der batterieexterne Busmaster (CBM) einerseits datentechnisch über einen im Bereich des Lagerfachs (LF) der eingelagerten Antriebsbatterie (BP) angeordneten Anschlusspunkt (AP) mit der von aussen zugänglichen Fahrzeugbus- oder Diagnoseschnittstelle (CAN, OBD) verbunden ist und andererseits zur Weiterleitung der vom Batteriemanagementsystem (BMS) der eingelagerten Antriebsbatterie (BP) bereitgestellten Antriebsbatteriedaten (D) und/oder einer Übertemperaturwarnung (W) datentechnisch mit einer übergeordneten Gefahrenmeldestelle (Z) verbunden ist, und wobei im Falle einer Übertemperatur eine Gefahrenmeldung (AL) gegebenenfalls zusammen mit einer Lagerfachposition (POS) der eingelagerten Antriebsbatterie (B) im Regallagersystem (RL) durch die übergeordnete Gefahrenmeldestelle (Z) ausgegeben wird.

15. Verfahren zur thermischen Überwachung einer Vielzahl von Antriebsbatterien (BP) für Elektrofahrzeuge, insbesondere von Lithium-Ionen- oder Natrium-Ionen-Antriebsbatterien, wobei die Antriebsbatterien (BP) in einem Regallagersystem (RL) mit einer Vielzahl von Lagerfächern (LF) eingelagert werden, wobei die Antriebsbatterien (BP) zur Anbringung in Elektrofahrzeugen vorgesehen sind und jeweils eine Mehrzahl von Batteriemodulen (MOD) mit einer Mehrzahl von Batteriezellen (BAT), ein Batteriemanagementsystem (BMS) sowie eine Anschlussmöglichkeit an eine Fahrzeugsteuerung des Elektrofahrzeugs umfassen, wobei die Antriebsbatterien (BAT) nach ihrer Einlagerung in einem Lagerfach (LF) über ihre jeweilige, von aussen zugängliche Fahrzeugbus- oder Diagnoseschnittstelle (CAN, OBD) insbesondere automatisch datentechnisch mit einer übergeordneten Gefahrenmeldestelle (Z) verbunden werden, um aktuelle Antriebsbatteriedaten (D), insbesondere Batterietemperaturwerte, und/oder eine Übertemperaturwarnung (W) von dem Batteriemanagementsystem (BMS) einer jeweils eingelagerten Antriebsbatterie (BP) zur thermischen Überwachung zu empfangen, und wobei im Falle einer Übertemperatur von der Gefahrenmeldestelle (Z) eine Gefahrenmeldung (AL) vor Ort und/oder an eine Leitstelle ausgegeben wird, gegebenenfalls zusammen mit einer Lagerfachposition (POS) der im Regallagersystem (RL) eingelagerten Antriebsbatterie (BP).
